(19) Europäisches Patentamt
European Patent Office
Office européen des brevets

(11) Publication number: **0 193 328 B1**

(12) **EUROPEAN PATENT SPECIFICATION**

(45) Date of publication of patent specification: **29.05.91**   (51) Int. Cl.⁵: **H04N 9/87**, H04N 9/89

(21) Application number: **86301083.1**

(22) Date of filing: **17.02.86**

(54) **Read start pulse generators.**

(30) Priority: **16.02.85 JP 28913/85**

(43) Date of publication of application:
**03.09.86 Bulletin 86/36**

(45) Publication of the grant of the patent:
**29.05.91 Bulletin 91/22**

(84) Designated Contracting States:
**AT DE FR GB NL**

(56) References cited:
**DE-A- 3 026 473**
**US-A- 4 127 866**
**US-A- 4 165 524**

(73) Proprietor: **SONY CORPORATION**
**7-35 Kitashinagawa 6-Chome Shinagawa-ku**
**Tokyo 141(JP)**

(72) Inventor: **Yoshinaka, Tadaaki**
**Sony Corp. Patents Division 6-7-35**
**Kitashinagawa**
**Shinagawa-ku Tokyo 141(JP)**
Inventor: **Inoue, Takao**
**Sony Corp. Patents Division 6-7-35**
**Kitashinagawa**
**Shinagawa-ku Tokyo 141(JP)**

(74) Representative: **Cotter, Ivan John et al**
**D. YOUNG & CO. 10 Staple Inn**
**London WC1V 7RD(GB)**

## Description

This invention relates generally to read start pulse generators. Read start pulse generators in accordance with the invention may, for example, be employed in image signal processing systems, for example in time base correctors of video tape recorders.

An image signal processing system, such as a video tape recorder, usually incorporates a time base corrector that causes a reproduced video signal to be written once in a memory, after analog to digital (A/D) conversion, and then read from the memory in synchronism with a stable reference pulse signal before digital to analog (D/A)-conversion.

The video signal, the time base of which thereby has been corrected, is outputted together with a synchronising signal, a burst signal and a blank pulse signal all included in the reference pulse signal. In order to write or read the reproduced video signal in or from the memory, the time base corrector includes a write clock generator and a read clock generator. The write clock generator generates a write start pulse signal to designate each head address of each scanning line in the memory and a write clock signal to increment the address sequentially in writing the video signal; and the read clock generator generates a read start pulse signal to designate each head address of each scanning line in the memory and a read clock signal to increment the address sequentially in reading the video signal.

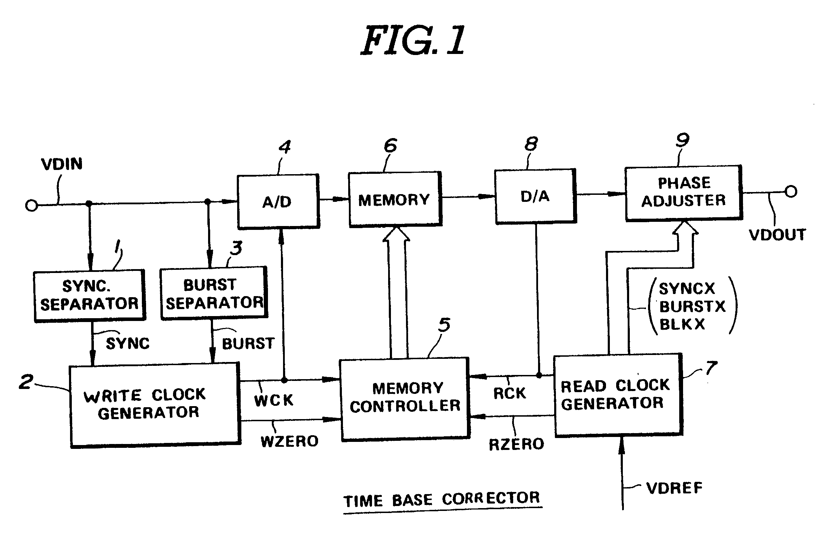

In a time base corrector shown in Figure 1 of the accompanying drawings and described in detail hereinbelow, it is necessary to allow a memory controller (shown at 5 in Figure 1) to be able automatically to adjust the timing (i.e. the phase) of generating the write start pulse or the read start pulse in order repeatedly to write or read the video (image) signal data for each scanning line in or from the memory with good reproducibility. Further, in writing or reading the video signal data in or from the memory, it is necessary to write or read the data corresponding to one cycle of a colour subcarrier signal as a unit in order to maintain continuity of the colour subcarrier phase in the memory. That is, it is necessary to synchronise the timing of generating the write or read start pulse signal with that of the colour subcarrier signal. In the case of an NTSC (National Television System Committee) type system, since the frequency of the subcarrier is set to be 455/2 times the line frequency, it is necessary to shift the phase of the write or read start pulse by 1/2 of the period (about 140ns) of the colour subcarrier for each scanning line. In practice, in order to generate the write and read start pulses, an automatic phase controller (APC) usually is incorporated in each of the read clock generator and the write clock generator.

Incidentally, in a video tape recorder for broadcasting stations, there is a need for a read clock generator by which the phase of the synchronising signal or the burst signal can be adjusted by any given phase shift relative to the station's reference signal, where necessary, in order to enable matching with another system connected to the time base corrector.

Therefore, since a previously proposed read clock generator of a time base corrector is provided with various adjusting devices such as a horizontal synchronisation phase adjusting device, a colour subcarrier phase adjusting device, and a hue adjusting device, in addition to the horizontal synchronisation colour subcarrier phase adjusting device, if the foregoing adjusting devices are operated after the horizontal synchronisation colour subcarrier phase adjusting device has been operated, a problem arises in that the horizontal synchronisation colour subcarrier phase adjusting device needs to be adjusted again. That is, it is impossible to operate the other adjusting devices independently, thus giving rise to a complicated time base corrector adjusting operation.

The arrangement and the operation of the previously proposed read clock generator mentioned above is described in detail hereinbelow with reference to the accompanying drawings.

According to the invention there is provided a read start pulse generator of an automatic colour subcarrier synchronising phase controller type for receiving a read horizontal synchronising signal and a read subcarrier signal both adjustably phase-shifted by predetermined values from a reference horizontal synchronising singal and a reference burst signal both separated from a reference pulse signal, the read start pulse generator comprising:

means for effecting a comparison in phase between an output of a timer and the read subcarrier signal after a predetermined timer time has elapsed from the read horizontal synchronising signal,

means for latching the timer time by the read subcarrier signal while controlling the timer time so that a phase error signal between the timer output and the read subcarrier signal becomes zero in order to generate a read start pulse in synchronism with the read subcarrier signal, and

means for adjusting the phase of the timer output by cancelling phase offsets caused by the phase-adjusted read horizontal synchronising signal and the phase-adjusted read subcarrier signal.

The invention also provides a read start pulse generator of an automatic subcarrier synchronising phase controller type for receiving a reference horizontal synchronising signal and a reference burst signal both separated from a reference pulse signal, the read start pulse generator comprising:

means for effecting a comparison in phase between an output of a timer and the reference burst signal after a predetermined timer time has elapsed from the reference horizontal synchronising signal,

means for latching the timer time in response to the burst signal while controlling the timer time so that a phase error signal between the timer output and the reference burst signal becomes zero in order to generate a latch output, and

means for adjusting the phase of the latch output by cancelling phase offsets caused by the phase-adjusted burst signal and a hue adjust signal before generating a read start pulse signal by latching the latch output in response to a phase-adjusted read subcarrier signal

Preferred embodiments of the present invention described hereinbelow provide read start pulse generators incorporated with a read clock generator of a time base corrector for a video tape recorder, for instance, in which it is unnecessary to readjust the automatic phase controller for colour subcarrier synchronisation even after the horizontal synchronisation phase, subcarrier phase, and/or hue have been adjusted.

The invention will be further described, by way of illustrative and non-limiting example, with reference to the accompanying drawings, in which like references designate the same or similar elements throughout, and in which:

Figure 1 is a schematic block diagram showing an exemplary general system configuration of a previously proposed time base corrector in which a read clock generator including a read start pulse generator embodying the present invention can be incorporated;

Figure 2 (which is split into two sections designated Figure 2A and Figure 2B, respectively) is a schematic block diagram of an example of a read clock generator including a previously proposed read start pulse generator;

Figure 3 is a timing chart showing various waveforms at different sections of the previously proposed read clock generator shown in Figure 2, for use in explaining the timing of various signals;

Figure 4 (which is split into two sections designated Figure 4A and Figure 4B, respectively) is a schematic block diagram of a read clock generator including a first read start pulse generator embodying the present invention;

Figure 5 is a detailed schematic diagram of a phase adjuster included in a synchronising signal generator of the read clock generator shown in Figure 4;

Figure 6 is a detailed schematic diagram of a phase adjuster included in a colour subcarrier signal generator of the read clock generator shown in Figure 4;

Figure 7 is a timing chart showing waveforms of the phase adjuster shown in Figure 5;

Figure 8 is a timing chart showing waveforms of the phase adjuster shown in Figure 6; and

Figure 9 (which is split into two sections designated Figure 9A and Figure 9B, respectively) is a schematic block diagram of a read clock generator including a second read start pulse generator embodying the present invention.

To facilitate understanding of embodiments of the present invention described hereinbelow, a previously proposed read start pulse generator will first be described in detail with respect to its application to a time base corrector (TBC) incorporated within an image signal processor, for instance a video tape recorder.

Some image signal processors, such as video tape recorders (VTRs), usually employ a time base corrector such as that shown in Figure 1 in which a reproduced video input signal VDIN is first converted into a corresponding digital signal by an analog to digital (A/D) converter 4, stored in a memory or memory unit 6, read from the memory 6 in synchronism with a stable reference pulse signal VDREF and converted again into a corresponding analog signal by a digital to analog (D/A) converter 8 as video data.

In more detail, a reproduced synchronising signal SYNC is separated by a synchronisation separator 1 from the reproduced input signal VDIN, reproduced from a tape, and is applied to a write clock generator 2. Further, a reproduced burst signal BURST is separated from the reproduced input signal VDIN by a burst separator 3 and also is applied to the write clock generator 2.

The write clock generator 2 generates a write clock signal WCK and a write start pulse signal WZERO in synchronism with the reproduced synchronisation signal SYNC and the reproduced burst signal BURST, both of which have time base fluctuations. The write clock signal WCK is applied to the A/D converter 4 as a sampling pulse signal and is applied also to a memory controller 5, together with the write start pulse signal WZERO.

In response to the write start pulse signal WZERO, the memory controller 5 designates each head address of each scanning line in the memory 6 and thereafter writes image signal data for each scanning line (i.e. for each 1H) in the memory 6 in sequence by sequentially incrementing the address in response to the write clock signal WCK.

The data written in the memory 6 is read in response to a read clock signal RCK and a read start pulse signal RZERO generated by a read clock generator 7 in response to the reference pulse signal VDREF having a stable period. That is to say, the memory controller 5 designates each head address of the memory area at which data for each scanning line is stored in response to the read start pulse signal RZERO, and thereafter reads image signal data for each 1H in sequence from the memory 6 by incrementing the address in response to the read clock signal RCK.

The image signal data is converted into analog signals by the D/A converter 8, which is driven in response to the read clock signal RCK, and then is outputted to a phase adjuster 9. The phase adjuster 9 sends out a reproduced output signal VDOUT by adding a synchronising signal SYNCX, a burst signal BURSTX, and a blank pulse BLKX which are all included in the reference pulse signal VDREF within the read clock generator 7.

In the time base corrector as shown in Figure 1, it is necessary for the memory controller 5 automatically to adjust the timing (i.e. the phase) at which the head addresses are designated so that the head data of the image signal can repeatedly and reliably be written in or read from the memory area having predetermined head addresses whenever image signal data for each scanning line is written in or read from the memory 6.

In this connection, an important point to note is that it is necessary to write or read data corresponding to one cycle of a colour subcarrier of the video signal as one unit when writing or reading image signal data in or from the memory 6, in order to maintain continuity of the phase of the colour subcarrier in the memory 6 and, additionally, to provide for easy matching with the processing in the circuitry employed in reading.

Therefore, in the memory controller 5, it is necessary to synchronise the timing, at which the write start pulse signal WZERO or the read start pulse signal RZERO is generated, with the colour subcarrier. However, in a colour television system of the NTSC (National Television System Committee) type, since the frequency of the colour subcarrier is 455/2 times the line frequency and, therefore, the phase of the subcarrier between two sequentially adjacent scanning lines is shifted by 1/2 of a cycle, it is necessary to shift the phases of the write start pulse signal WZERO sent from the write clock generator 2 and the read start pulse signal RZERO sent from the read clock generator 7 by 1/2 of a period (about 140 ns) of the colour subcarrier for each scanning line.

In this case, since the phase of the write start pulse signal WZERO and the phase of the read start pulse signal RZERO are both shifted by 1/2 of a period for each scanning line, the image signal data read from the memory 6 can perfectly be restored in phase relationship between writing and reading.

In practice, in order to generate the write start pulse signal WZERO and the read start pulse signal RZERO so that they both have the phase difference described above, an automatic phase controller (APC circuit) is provided in each of the write clock generator 2 and the read clock generator 7.

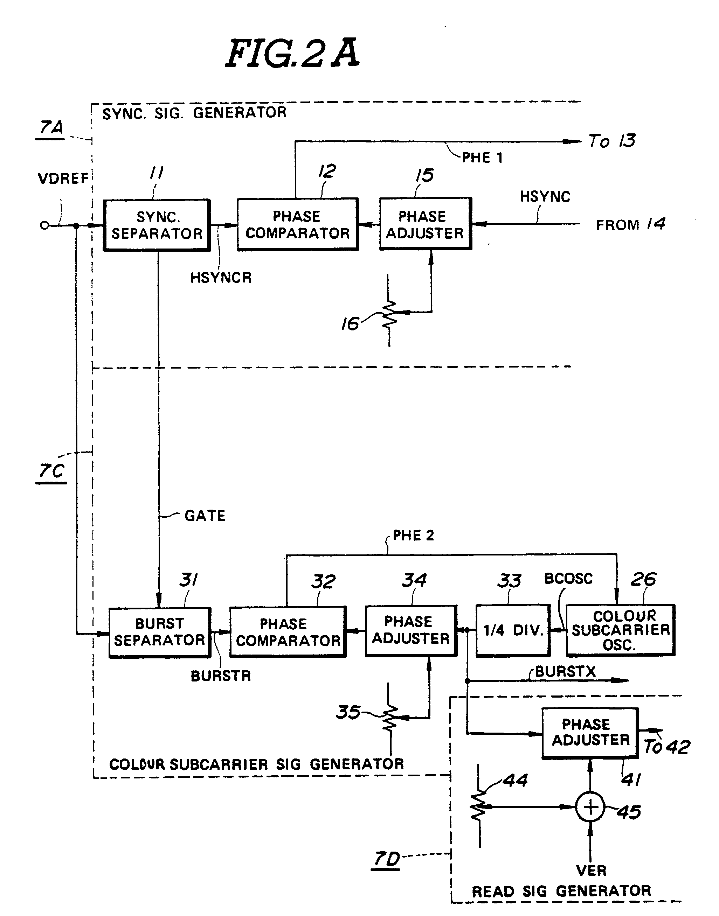

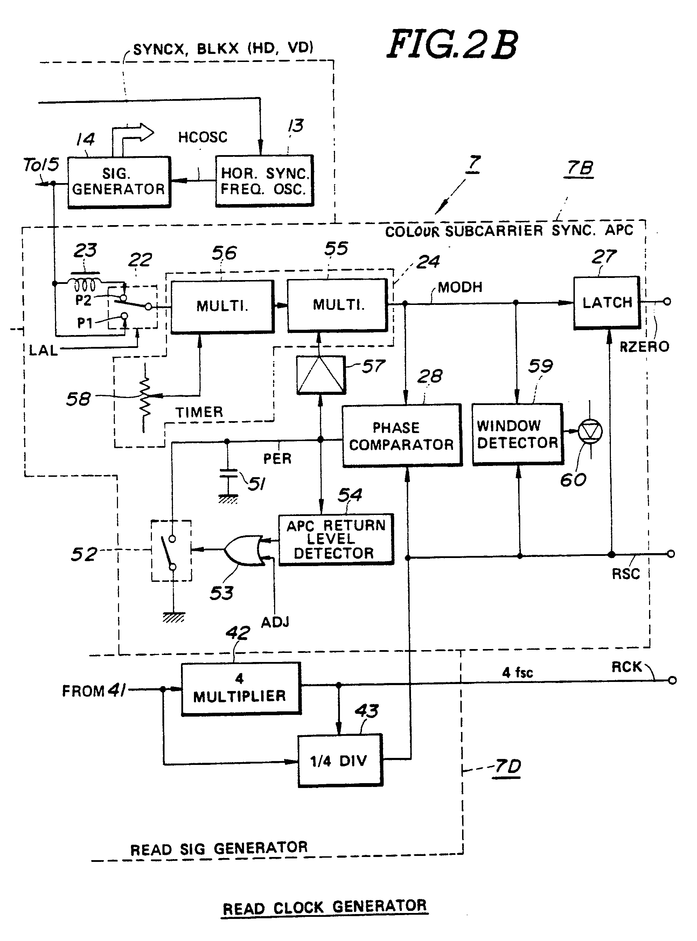

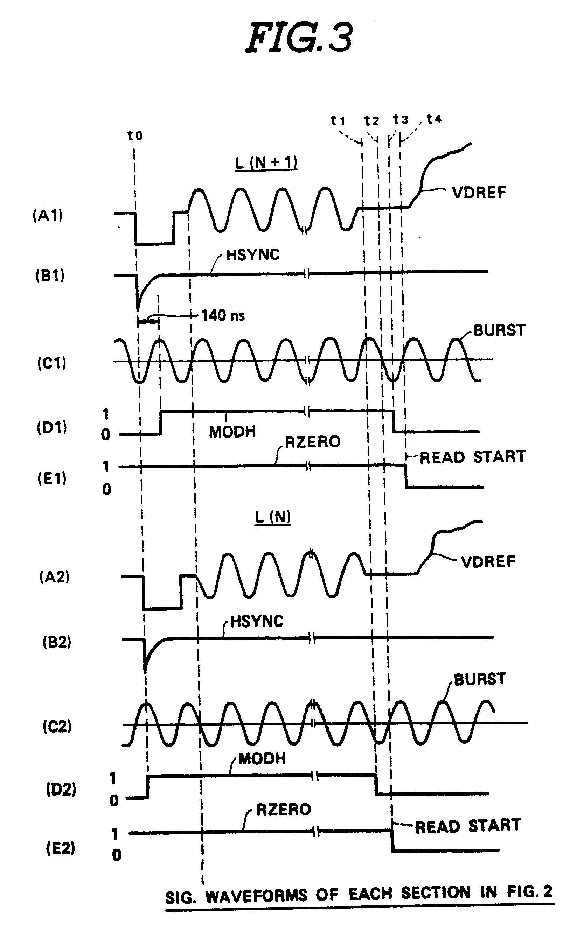

Incidentally, VTRs for broadcasting stations use a read clock generator 7 as shown in Figure 2, in which, in order to effect matching with a device provided at a succeeding stage, the phases of the horizontal synchronising signal and the burst signal can be adjusted by any given phase difference value from the reference pulse signal VDREF (i.e. a reference signal of the station) where necessary. The read clock generator 7 of this type will now be described with reference to Figures 2 and 3. In a horizontal synchronising signal forming circuit or generator 7A, a horizontal synchronising signal HSYNCR included in the reference pulse signal VDREF is separated in a synchronisation separator 11 and then supplied to a phase comparator 12. A horizontal synchronisation frequency oscillator 13 of a voltage controlled oscillator (VCO) type supplies an oscillation output HCOSC, having a frequency nfH which is n times higher than the horizontal synchronisation frequency fH to a signal generator 14. In response to the oscillation output HCOSC, the signal generator 14 generates a horizontal synchronisation signal HSYNC which is supplied to the phase comparator 12 after the phase has been adjusted by a phase adjuster 15 made up of a phase shifter.

The phase comparator 12 feeds back a phase error voltage PHE1 representing the phase difference between the horizontal synchronisation signal HSYNC supplied from the phase adjuster 15 and the reference horizontal synchronisation signal HSYNCR to the horizontal synchronisation frequency oscillator 13 in order to control the oscillation frequency of the oscillator 13 so that the phase error voltage PHE1 becomes zero. Therefore, the horizontal synchronisation signal HSYNC provided by the signal generator 14 has a phase shift corresponding to a phase difference produced by the phase adjuster 15 relative to the phase of the reference horizontal synchronising signal HSYNCR.

The phase adjuster 15 includes a horizontal synchronisation phase adjusting device 16. The phase-shift value of the adjusting device 16 can be adjusted freely by an operator operating the adjusting device 16 where necessary. As described above, it is possible freely to determine the phase difference between the horizontal synchronisation signal HSYNC and the reference horizontal synchronisation signal HSYNCR.

Further, in the case of the previously proposed arrangement, the signal generator 14 outputs a synchronisation signal SYNCX and a blank signal BLKX (made up of a horizontal synchronising signal HD and a vertical synchronising signal VD) synchronised with the horizontal synchronisation signal HSYNC.

The horizontal synchronising signal HSYNC is supplied to an automatic phase controller (APC) 7B for colour subcarrier synchronisation. The APC 7B receives the horizontal synchronising signal HSYNC directly at one switch input terminal P1 of a switch circuit 22 and receives it also at another switch input terminal P2 of the same switch circuit 22 after it has been delayed by 1/2 of a period (i.e. 140 ns) by a delay circuit 23. The switch circuit 22 operates to switch the switch input terminals P1 and P2 for each 1H section in response to a sequential line switching signal LAL, the logical level of which is inverted for each 1H period on the basis of the reproduced horizontal synchronising signal HSYNC. The horizontal synchronising signal HSYNC is delayed by 1/2 of a period of the colour subcarrier for each 1H section through the delay circuit 23 and then inputted as a trigger signal to a timer circuit 24 made up of two monostable multivibrators.

The timer circuit 24 generates a timer output MODH indicative of time points near time points at which the read start pulse signal RZERO should be generated on the basis of the timing of the horizontal synchronising signal HSYNC. As shown in Figure 3 at (A2) to (E2), which refer to an n-th scanning line L(N), a pulse of the horizontal synchronising signal HSYNC (Figure 3 (B2)) is received at a time point to through the switch input terminal P1 of the switch circuit 22 to cause the timer output MODH to rise to logic level "1" as shown in Figure 3 (D2). Thereafter, the timer circuit 24 operates in such a way that the timer output MODH falls to logic level "0" at a time point t1 just prior to a time point t2 at which the read start pulse signal RZERO should be generated (Figure 3 (E2)).

The timer output MODH is supplied to a latch circuit 27. The latch circuit 27 operates in response to a read subcarrier signal RSC provided by a read signal generator or forming circuit 7D on the basis of an oscillator output BCOSC of a colour subcarrier frequency oscillator 26 in a colour subcarrier signal generator or forming circuit 7C. By virtue of this, at a timing corresponding to the time point t2 (Figure 3) at which the burst signal BURST (Figure 3 (C2)) generated on the basis of the ocillation output BCOSC crosses zero in a positive-going sense, the logic level of the timer output MODH is latched by the latch circuit 27. Therefore, the read start pulse signal RZERO, which is obtained at an output terminal of the latch circuit 27, falls from "1" to "0" at the time point t2 because the timer output MODH falls to "0" at the time point t1 immediately before the time point t2, so that the reading of data from the memory 6 begins in response to this trailing edge.

On the other hand, with respect to the (N + 1)th scanning line L(N + 1), the timer circuit 24 receives the horizontal synchronisation signal HSYNC as a trigger signal through the delay circuit 23 and the switch input terminal P2 of the switch circuit 22. Therefore, as shown in Figure 3 (D1), the timer circuit 24 generates a timer output MODH which rises at a time point which is delayed by the delay time (140 ns) of the delay circuit 23 from the time point to. Thereafter, the timer output MODH falls to logic "0" at a time point t3 immediately before a time point t4 at which the read start pulse signal RZERO should be generated.

In this case, the phase of the burst signal BURST is delayed by 1/2 of a period of the colour burst signal (which corresponds to the delay time of the delay circuit 23) as compared with the case shown in Figure 3 (C2). Therefore, the time at which the timer output MODH of the timer circuit 24 falls occurs immediately before the read start pulse signal RZERO in the cases of both the (N)th and (N + 1)th scanning line.

The timer output MODH is compared with the read subcarrier signal RSC by a phase comparator 28. The read subcarrier signal RSC is formed by the read signal generator 7D on the basis of the burst signal BURST formed by the colour subcarrier signal generator 7C. In the colour subcarrier signal generator 7C, a burst separator 31 separates the burst signal included in the reference pulse signal VDREF in response to a gate signal GATE supplied from the synchronisation separator 11, the resultant burst signal BURSTR being applied to a phase comparator 32.

The colour subcarrier frequency oscillator 26, which is of a voltage controlled oscillator (VCO) type including a quartz oscillator, provides the oscillation output BCOSC which has a frequency 4fsc four times higher than the colour subcarrier frequency fsc, which output is divided by a 1/4 divider 33 and supplied to the phase comparator 32 as the burst signal BURST through a phase adjuster 34. Then, a phase error voltage PHE2 obtained by the phase comparator 32 is fed back to the colour subcarrier frequency oscillator 26 to cause it to provide an oscillation output BCOSC for allowing the phase error voltage PHE2 to become zero.

The phase adjuster 34 is made up of phase shifters and includes a subcarrier phase adjusting device 35. When the operator adjusts the adjusting device 35, the phase difference between the burst signal BURSTX and the separated burst signal BURSTR can be adjusted freely on the basis of a phase difference value in the phase adjuster 34.

The burst signal BURSTX is supplied to a phase adjuster 41, made up of phase shifters and included in the read signal generator 7D, in order to shift the phase thereof, and then the frequency thereof is multiplied by four in a 4/1 multiplier 42. Therefore, the read clock signal RCK, having a frequency 4fsc four times higher than the colour subcarrier frequency, is outputted from an output terminal of the 4/1 multiplier 42.

The read clock signal RCK is supplied to a 1/4 divider 43, so that the read subcarrier signal RSC, having the frequency fsc of the colour subcarrier, can be obtained from an output terminal of the divider 43. An output of the phase adjuster 41 is applied to the 1/4 divider 43 as a reset signal to synchronise the operation of the divider with the burst signal, the phase of which is adjusted by the phase adjuster 41, so that the phase of the read subcarrier signal RSC is synchronised with the output of the phase adjuster 41.

The phase adjuster 41 is supplied by an adder 45 with an addition output or sum of an adjustment output applied from a hue adjusting device 44 as a phase adjusting signal and a velocity error signal VER. Therefore, the phase differences between the read clock signal RCK and the burst signal BURSTX and between the read subcarrier signal RSC and the burst signal BURSTX can be adjusted on the basis of the adjustment output of the phase adjusting device 44 and the velocity error signal VER.

As described above, the phase comparator 28 of the APC 7B for colour subcarrier synchronisation compares in phase the trailing edges of the timer output MODH (Figure 3 (D2) and (D1)) with the zero-crossing points of the burst signal BURST (Figure 3 (C2) and (C1)), generates a phase error output PER indicative of the phase difference between the two, and applies the output PER to the timer circuit 24 as a timer time control signal. At this moment, the timer circuit 24 operates in a state in which the phase error output PER indicates a small advance phase difference previously determined relative to the zero-crossing points of the burst signal BURST.

The thus phase-controlled timer output MODH is applied as input data to the latch circuit 27 which is operative to latch at the zero-crossing points of the burst signal BURST and outputs a read start pulse signal RZERO falling to logic level "0" at the time points at which the burst signal BURST crosses zero. Therefore, the read start pulse signal RZERO can be generated securely, being synchronised with the zero-crossing points of the burst signal BURST, because the timer output MODH is allowed to fall to logic level "0" immediately before the time points (i.e. t2 and t4) at which video signal data should start to be read from the memory 6.

Since the zero-crossing points of the burst signal BURST are generated for each period, where the phase difference between the timer output MODH and the read subcarrier signal RSC is too great a problem can arise in that the trailing edges of the read start pulse signal RZERO are stabilised at zero-crossing points other than the points immediately before the image signal data.

To solve the above-mentioned problem, the colour subcarrier synchronising APC 7B shown in Figure 2 is provided with a capacitor 51 and a switch circuit 52 at an output terminal of the phase comparator 28 in order to hold the phase error output PER and to supply a predetermined voltage level (e.g. ground voltage) through the switch circuit 52. The switch circuit 52 is on-off controlled by a detection output of an APC return level detector 54 through an OR gate 53. When the signal level of the phase error output PER is beyond a pull-in enable range, the capacitor 51 is grounded via the switch circuit 52 in order to return the phase error output PER to ground potential.

In this connection, since the stable points of a phase pull-in loop controlled by the output of the phase comparator 28 are switched for each scanning line by the switch circuit 22, a problem arises in that it is impossible always to pull in the timer output MODH at the phase immediately before the time point t2 or t4 shown in Figure 3. Further, a problem arises in that it is impossible to pull in the timer output MODH in the case where the horizontal synchronising signal HSYNC is not continuous due to dropouts or phase jump. As described above, when the phase error output PER of the phase comparator 28 changes to values at which pull-in operation is impossible, the APC operation is returned to the normal operating state by the phase error output PER being locked forcibly to zero (volts) by the APC return level detector 54 and the switching circuit 52. In this way, when the horizontal synchronising signal HSYNC is returned to the normal state, since the timer output MODH of the timer circuit 24 is returned to the nearest stable point (zero-crossing points of the burst signal), it is possible securely to reproduce the phase of the read start pulse signal RZERO.

In the above manner, however, in the case where the timer output MODH falls at time points corresponding to the midpoints in phase between two stable points existing for each period of the burst signal BURST, two stable points occur. In practice, in manufacturing the timer circuit 24, tolerance or dispersion in the timer delay time inevitably is present, whereby a problem arises in that an improper timer circuit can be used. In this case, the read start pulse signal RZERO cannot be generated with a single phase, thus causing an insufficient result in the case where the phase of the video signal must be reproduced strictly, such as when reproduced video signals are edited.

To overcome the above-mentioned problem, in the case of the previously proposed read clock generator shown in Figure 2, the timer circuit 24 is composed of a first monostable multivibrator 55 having a sufficiently long timer (delay) time and a second monostable multivibrator 56 having a sufficiently short timer (delay) time, for instance as short as about one period of the burst signal, and the phase error output PER of the phase comparator 28 is supplied to the first monostable multivibrator 55 through a buffer 57 as a timer time control signal. Further, a horizontal synchronising colour subcarrier phase adjusting device 58 is provided for the second monostable multivibrator 56, so that the timing of the trailing edge of the timer output MODH can finely be adjusted by the adjusting device 58.

In this case, the switching circuit 52 is arranged to be turned on by an adjustment mode signal ADJ via the OR gate 53.

Further, the timer output MODH and the burst signal BURST are applied to a window detector 59 to light up a display element 60 when the phase difference lies within a predetermined window range. The window detector 59 detects that the phase of the timer output MODH is in close proximity to the stable points (i.e. any one of zero-crossing points) of the burst signal BURST.

When the colour subcarrier synchronising APC 7B is configured as described above, it is possible to adjust the phase of the trailing edge of the timer output MODH to be near the stable point by means of the phase comparator 28 and the APC return level detector 54 before the APC operation. That is, a timer time control signal of ground potential level is applied to the first monostable multivibrator 55 of the timer circuit 24 by applying an adjust mode signal ADJ to the switch circuit 52 through the OR gate 53 to turn on the switch circuit 52 and thus discharging the capacitor 51 for holding the phase error output of the phase comparator 28 to ground potential via the switch circuit 52. At this moment, the multivibrator 55 is controlled so as to have a timer or delay time of lock-in operation.

In this state, the timer or delay time of the second monostable multivibrator 56 is adjusted by operating the phase synchronising colour subcarrier phase adjusting device 58 to light up the display element 60. As a result, once the display element 60 is illuminated, it is possible to adjust the phase of the trailing edge of the timer output MODH generated during this adjustment to be near a stable point at which the phase should be locked to a plurality of stable points of the burst signal BURST.

Once the state where the display element 60 is lighted up is obtained, the adjust mode signal ADJ is switched to a normal operation state which is indicated by logic level "0" to switch the switch circuit 52, whereby the mode is switched to the APC operation based on the phase comparator 28 and the APC return-level detector 54. At this moment, since the timer output MODH has been adjusted to be near a stable point of the burst signal BURST, it is possible readily to pull in the timer output MODH to the stable point.

However, the previously proposed read clock generator shown in Figure 2 involves the following problems. In the colour subcarrier synchronising APC 7B shown in Figure 2, after the timer circuit 24 has been adjusted by adjusting the horizontal synchronising colour subcarrier phase adjusting device 58, whenever the horizontal synchronising phase adjusting device 16 of the synchronising signal generator 7A is adjusted, or the subcarrier phase adjusting device 35 of the colour subcarrier signal generator 7C is adjusted, or the hue adjusting device 44 of the read signal generator 7D is adjusted, the adjustment condition that the display element 60 is illuminated by the output of the window detector 59 is destroyed, thus giving rise to a problem in that the timer circuit 24 needs to be adjusted again.

The above description indicates that it is impossible independently and freely to adjust the timer circuit by means of the horizontal synchronising phase adjusting device 16, the subcarrier phase adjusting device 35 and the hue adjusting device 44, thus causing a complicated TBC adjustment operation.

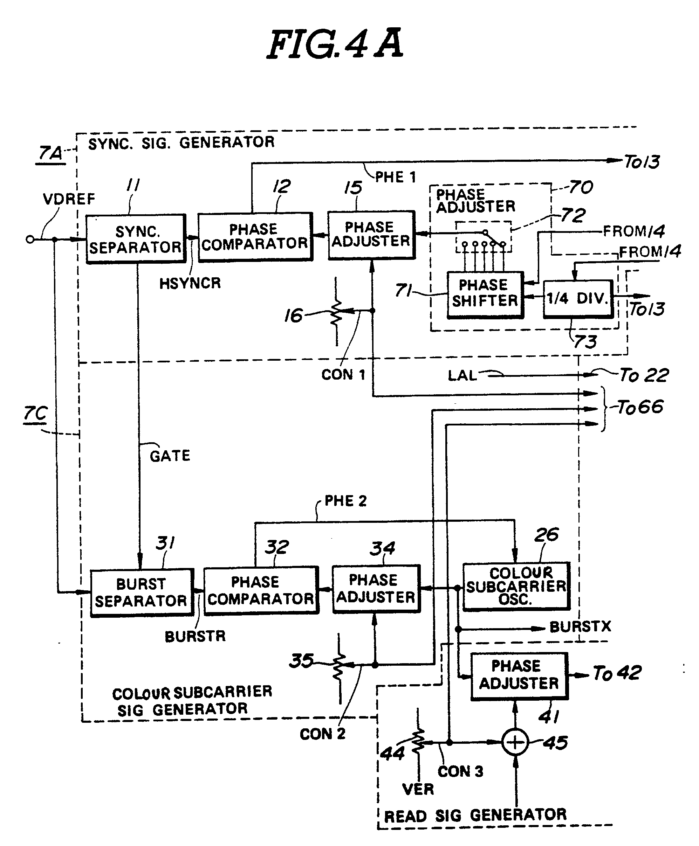

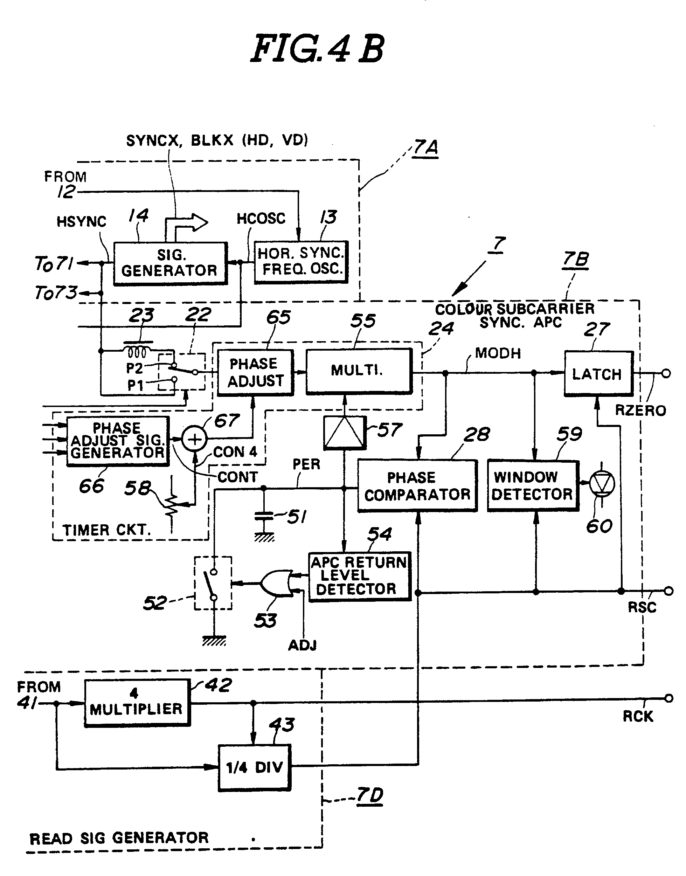

A description will now be given, with reference to Figure 4, of a first embodiment of the invention residing in a read start pulse generator included in a read clock generator. The read clock generator of Figure 4 is generally similar to that of Figure 2, as is shown by employing the same references for elements and sections corresponding to elements or sections of Figure 2. Consequently, the read clock generator of Figure 4 will be described only in so far as it differs from that of Figure 2.

In the case of Figure 4, the configuration of the timer circuit 24 of the APC 7B for the colour subcarrier synchronisation is different from that shown in Figure 2. That is to say, in the read clock generator shown in Figure 4, the output of the switch circuit 22 is supplied to the monostable multivibrator 55 through a phase adjuster 65 made up of phase shifters, and outputs of the horizontal synchronising colour subcarrier phase adjusting device 58 and a phase adjust signal generator 66 are supplied through an adder 67 to the phase adjuster 65 as a phase adjust signal.

An adjust signal CON1 provided by the horizontal synchronising phase adjusting device 16 of the synchronising signal generator 7A, an adjust signal CON2 obtained by the subcarrier phase adjusting device 35 of the colour subcarrier signal generator 7C, and an adjust signal CON3 obtained by the hue adjusting device 44 of the read signal generator 7D, are supplied to the phase adjust signal generator 66. Further, a phase control signal CONT is supplied to the phase adjuster 65 via the adder 67 in such a way as to have a value which prevents the signal supplied to the phase comparator 28 of the APC 7B for colour subcarrier synchronisation as a comparison input from being changed in phase when each adjusting device 16, 35 and 44 is operated to effect an adjustment.

Further, in the case of Figure 4, a phase adjuster 70 is disposed between the signal generator 14 and phase adjuster 15 of the synchronising signal generator 7A. The phase adjuster 70 is composed of a phase shifter 71 for stepwise adjustment of the phase in time steps (i.e. 280 ns) of one period of the burst signal, a switching circuit 72 for manually switching output taps of the phase shifter, and a 1/4 divider 73 for dividing by four the output of the horizontal synchronising frequency oscillator 13 and for outputting a clock signal CK to the phase shifter 71, an output obtained at an output terminal of the switching circuit 72 being supplied to the phase adjuster 15.

The phase adjuster 70 functions as an adjustment element for adjusting the phase difference between the horizontal synchronising signal HSYNC and the reference horizontal synchronising signal HSYNCR in cooperation with the horizontal synchronising phase adjusting device 16. When a phase shift value of one (i.e. 280 ns) or more periods of the burst signal is required, a coarse phase adjustment can be effected for each 280 ns by switching the output taps of the switching circuit 72 and, further, a fine adjustment of 280 ns or less can be effected by the horizontal synchronising signal adjusting device 16.

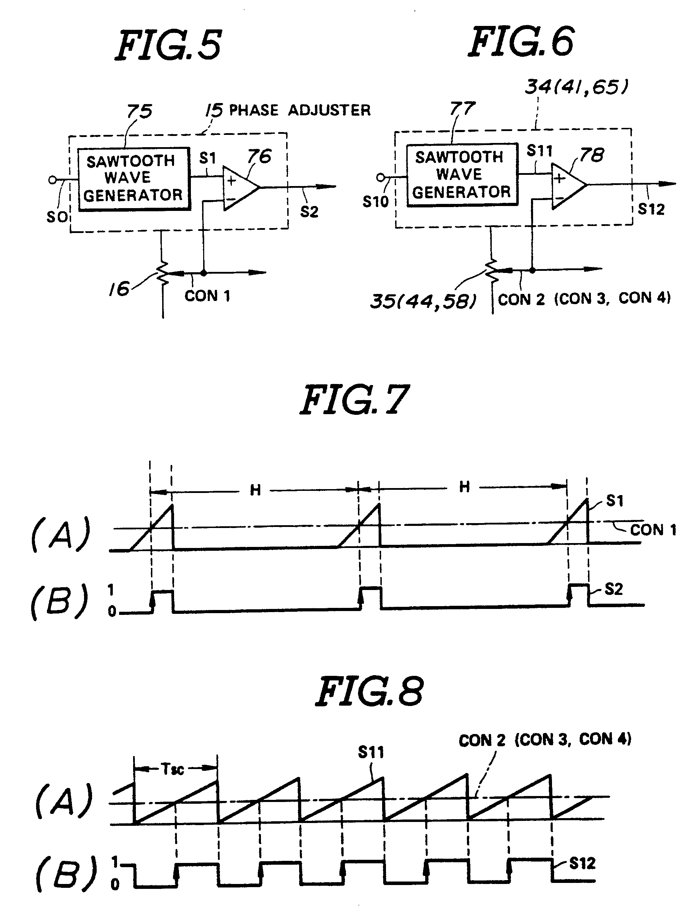

The phase adjuster 15 can employ the circuit configuration shown in Figure 5. That is to say, a frequency input signal SO supplied from the phase adjuster 70 is received by a sawtooth wave generator 75 which outputs a sawtooth wave output S1 (Figure 7(A)) having the period H of the horizontal synchronising signal. The sawtooth wave output S1 rises in level at a predetermined slope roughly during one period of the colour subcarrier frequency so as intermittently to generate a triangular portion during each period H.

The sawtooth wave output S1 is compared with the adjust signal CON1 supplied from the horizontal synchronising phase adjusting device 16 by a comparator 76. During the time interval in which the sawtooth wave output S1 is of higher level than the adjust signal CON1, an output signal S2 (Figure 7(B)) outputted from an output terminal of the comparator 76 rises to logic level "1".

Therefore, when the signal level of the adjust signal CON1 is changed by operating and adjusting the phase adjusting device 16, it is possible to change in a controlled manner the timing at which the output signal S2 rises in level from "0" to "1" (that is, the phase during the time interval of the period H).

The phase adjusters 34, 41, and 65 can employ the circuit configuration shown in Figure 6. In the same way as in the phase adjuster 15 (Figure 5), the phase adjusters 34, 41, and 65 receive a frequency input signal S10 which is applied to a sawtooth wave generator 77. A sawtooth wave output S11 (Figure 8(A)) of the generator 77 is compared by a comparator 78 with the adjust signal CON2 supplied from the subcarrier phase adjusting device 35, the adjust signal CON3 supplied from the hue adjusting device 44, or an adjust signal CON4 supplied from the horizontal synchronising colour subcarrier phase adjusting device 58 in order to output a comparison output S12 (Figure 8-(B)). In this case, since the frequency input signal S10 has a signal waveform in which triangular waves are repeated continuously with a period Tsc of the colour subcarrier frequency fsc, the comparison output S12 can be changed by controlling the phase of the leading edge at which it changes from logic level "0" to logic level "1" during the period Tsc according to the signal levels of the adjust signal CON2, CON3 or CON4.

In the configuration as described with reference to Figure 4, the read clock generator 7 can be adjusted in the same way as was described with reference to Figure 2. That is, the phase difference between the reference horizontal synchronising signal HSYNCR included in the reference pulse signal VDREF and the horizontal synchronising signal HSYNC is first adjusted by using the phase adjuster 70 and the phase adjusting device 16 both included in the synchronising signal generator 7A. At this time, a coarse adjustment can be effected in units of one or more periods (i.e. 280 ns) of the burst signal by switching the coarse phase difference by switching the switching circuit 72 of the phase adjuster 70. In addition, a fine adjustment of less than one period can be effected by adjusting the phase adjusting device 16 of the phase adjuster 15.

Further, by adjusting the phase adjusting device 35 of the colour subcarrier signal generator 7C, the phase difference between the burst signal included in the reference pulse signal VDREF and the burst signal of the TBC output is adjusted as occasion demands. A range of adjustment of one period of the burst signal, that is within plus or minus 140 ns, is sufficient for the phase adjusting device 35.

Further, by adjusting the phase adjusting device 44 of the read signal generator 7D, the phase difference bewteen the burst signal included in the reference pulse signal VDREF and the chrominance signal of the TBC output is adjusted. In this case, a range of adjustment of one period of the chrominance signal, that is within plus or minus 140 ns, is sufficient for the phase adjusting device 44.

After these adjustments, the switching circuit 52 of the colour subcarrier synchronising APC 7B is turned on in response to the adjustment mode signal ADJ, and the phase difference between the horizontal synchronising signal and the colour subcarrier is set by adjusting the phase adjusting device 58 when the phase error output PER of the phase comparator 28 is zero. This setting is continued until the display element 60 is lighted up. Thereafter, when the switching circuit 52 is turned off by switching the adjustment mode signal ADJ to the normal mode, it is possible to realise a state in which the timer output MODH of the timer circuit 24 follows the phase of the read subcarrier signal RSC whereby it is possible to send out a read start pulse signal RZERO of good reproducibility from the latch circuit 27 of the colour subcarrier synchronising APC 7B.

In the state in which the system is pulled into this APC operation, if it is required to adjust the phase difference between the horizontal synchronising signal HSYNCR of the reference pulse signal VDREF and the horizontal synchronising signal HSYNC, a coarse adjustment is first made by switching the switching circuit 72 of the phase adjuster 70 in the synchronising signal generator 7A, and then a fine adjustment is made by using the phase adjusting device 16. In this state, the oscillation frequency of the horizontal synchronising frequency oscillator 13 can be controlled by the phase error output PHE1 of the phase comparator 12 in the synchronising signal generator 7A in accordance with the above adjustment operation, so that the phase of the horizontal synchronising signal SYNCX can be changed or controlled relative to the phase adjuster 9 (Figure 1) of the time base corrector.

In this case, however, since the adjust signal CON1 supplied from the phase adjusting device 16 to the phase adjuster 15 is supplied also to the phase adjust signal generator 66 so that the phase shift value of the phase adjuster 65 is changed or controlled, the phase adjuster 65 operates so as to compensate for the value corresponding to the change in phase of the horizontal synchronising signal HSYNC: as a result, the phase error output PER obtained at the output terminal of the phase comparator 28 is kept unchanged.

In this connection, since the adjustment in the phase adjuster 70 is made in units of the burst signal period, only the adjustment value (i.e. within the phase difference of plus or minus 140 ns) on the basis of the adjustment signal CON1 supplied from the phase adjusting device 16 is generated by the phase comparator 28 as an effective value.

Further, when it is required to change the phase difference between the burst signal BURST included in the reference pulse signal VDREF and the burst signal BURSTX of the output video signal VDOUT, it is sufficient to change the phase shift value of the phase adjuster 34 by operating the adjusting device 35. In this state, since the oscillation frequency of the colour subcarrier frequency oscillator 26 is changed by a value corresponding to the adjust signal CON2, it is possible to adjust the phase of the burst signal BURSTX.

Further, since a change corresponding to that of the adjust signal CON2 is produced in the control output signal CONT of the phase adjust signal generator 66, the phase shift value of the phase adjuster 65 can be changed. As a result, although the phase of the timer output MODH supplied to the phase comparator 28 changes, the phase of the read subcarrier signal RSC supplied from the read signal generator 7D also changes according to the change of the burst signal BURSTX. Therefore, no change is produced in the phase error output PER of the phase comparator 28 due to the adjustment of the phase adjusting device 35, so that the APC 7B maintains the state in which the phase is locked. Thus, as described above, it is possible to adjust the phase of the colour subcarrier without changing the timing of the read start pulse signal RZERO.

Further, when it is required to change the hue of the chrominance signal included in the output video signal VDOUT, it is sufficient to adjust the hue adjusting device 44 of the read signal generator 7D. In this case, the change produced in the adjust signal CON3 of the phase adjusting device 44 changes the phase shift value of the phase adjuster 41 through the adder 45, so that the phases of the read subcarrier signal RSC and the read clock signal RCK can be changed for control.

Further, in this case, since the adjust signal CON3 of the phase adjusting device 44 changes or controls the phase shift value of the phase adjuster 65 through the phase adjust signal generator 66, it is possible to adjust the hue without producing a change in the phase error output PER of the phase comparator 28, so that the phase locked state can be maintained unchanged in the colour subcarrier synchronising APC 7B.

Therefore, in the system configuration shown in Figure 4, even if the horizontal synchronising phase adjusting device 16, the subcarrier phase adjusting device 35 and the hue adjusting device 44 are adjusted independently, it is possible to maintain unchanged the phase locked state in the colour subcarrier synchronising APC 7B. Therefore, it is not necessary to readjust the horizontal synchronising colour subcarrier phase adjusting device 58 in the colour subcarrier synchronising APC 7B, as described above in the case of the previously proposed read clock generator shown in Figure 2, after the adjusting devices 16, 35, 44 have been operated.

The operation of the read clock generator shown in Figure 4 will now be described.

(1) The horizontal synchronising signal HSYNC is adjusted relative to the reference horizontal synchronising signal HSYNCR by using the coarse phase adjuster 72 and the fine phase adjusting device 16.

(2) The burst signal BURSTX is adjusted relative to the reference burst signal BURSTR by using the phase adjusting device 35.

(3) The read clock signal RCK and the read subcarrier signal RSC (chrominance) are adjusted relative to the reference burst signal BURSTX by using the phase adjusting device 44 and the velocity error signal VER.

(4) The switch circuit 52 is turned on to set a phase difference bewteen the horizontal synchronising signal (timer output MODH) and the subcarrier signal (burst BURST), when the phase error output PER is zero, by using the phase adjusting device 58.

(5) Thereafter, the switch circuit 52 is turned off to pull-in the timer output MODH in the read subcarrier signal RSC so that a stable read start pulse RZERO is generated.

(6) In this APC operational state, the horizontal synchronising signal HSYNCR can be adjusted again by the use of only the phase adjusting device 16. The adjust signal CON1 is supplied to the phase adjust signal generator 66 for controlling the phase shift value in the phase adjuster 65 so as to compensate the adjuster 65 for the change in phase of the signal HSYNCR without changing the phase error signal PER.

(7) The burst signal BURSTX can be adjusted by using the adjusting device 35. The adjust signal CON2 is supplied to the phase adjust signal generator 66. Therefore, although the timer output MODH changes in phase, since the read subcarrier signal RSC also changes in phase according to the burst signal BURSTX the phase error output PER is kept unchanged; that is, the colour subcarrier phase can be adjusted without changing the timing of the read start pulse signal RZERO.

(8) The hue of the chrominance signal can be adjusted by using the hue adjusting device 44. The adjust signal CON3 is supplied to the phase adjust signal generator 66 for controlling the phase shift value in the phase adjuster 65 so as to compensate the adjuster 65 for the change in phase of the chrominance signal without changing the phase error signal PER.

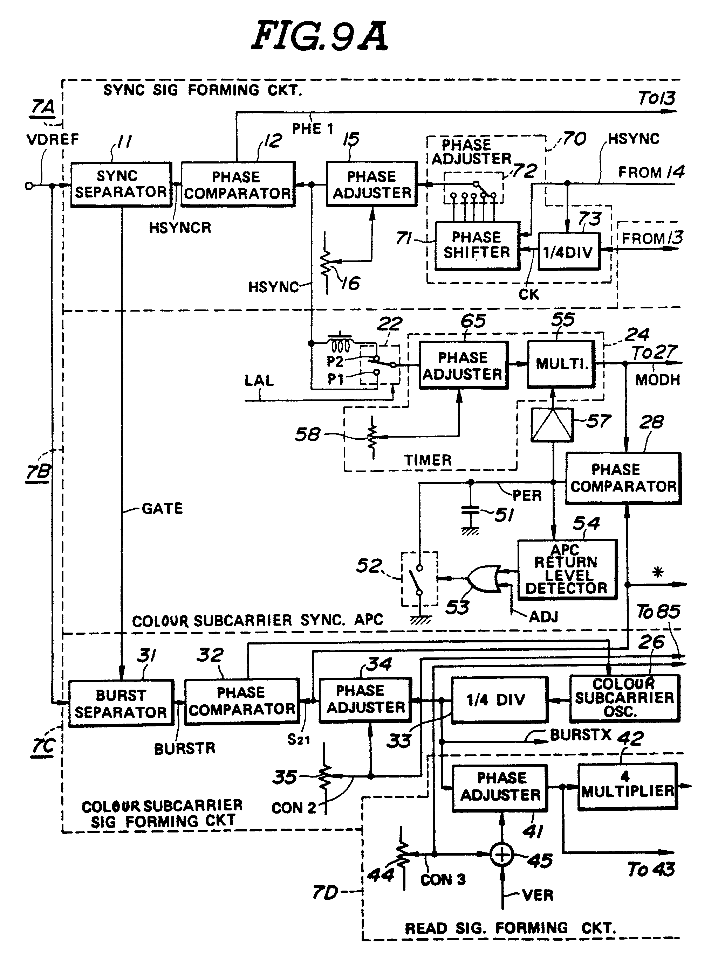

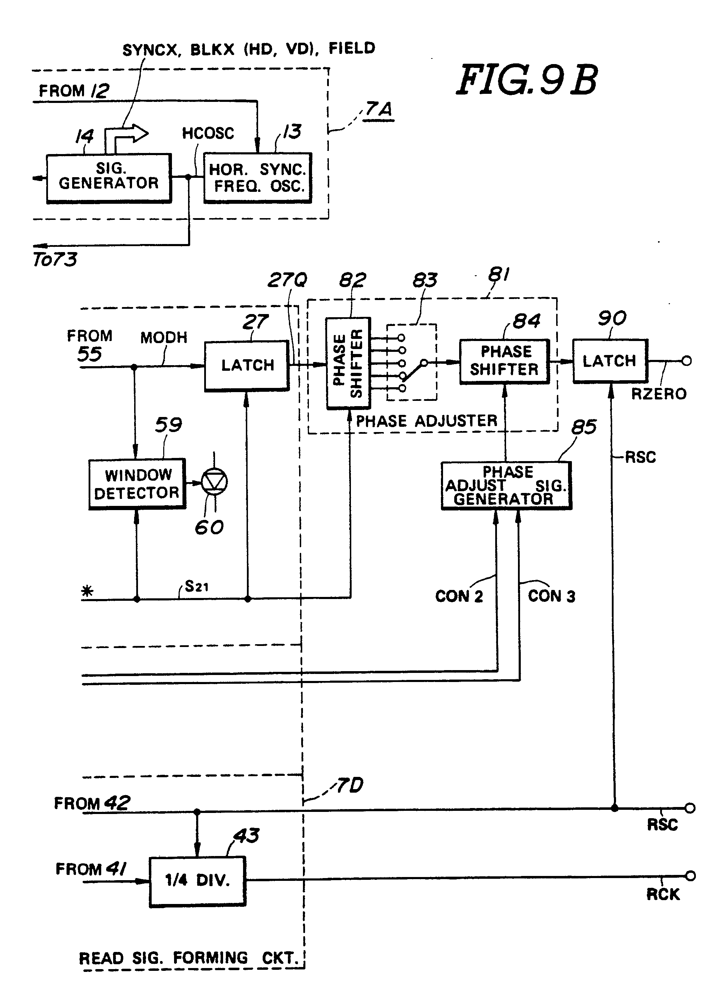

Figure 9 shows a read clock generator in accordance with a second embodiment of the present invention. The read clock generator of Figure 4 is generally similar to that of Figure 2, as is shown by designating elements and sections corresponding to elements and sections shown in Figure 4 by the same reference numerals. Consequently, the read clock generator of Figure 9 will be described only in so far as it differs from that of Figure 4.

In the case of Figure 9, the adjust signals CON1, CON2, and CON3 are not supplied to the phase adjuster 65 of the timer circuit 24. Instead, the system configuration is such that the phase adjustment is made at a rear stage of the APC loop. That is to say, in the colour subcarrier synchronising APC 7B of Figure 9, the frequency output S21 supplied from the phase adjuster 34 to the phase comparator 32 of the colour subcarrier signal generator 7C is supplied also to the phase comparator 28, the window detector 59 and the latch circuit 27, to all of which the timer output MODH is supplied. The frequency output S21 is in synchronism with the burst signal BURSTR separated from the reference pulse signal VDREF on the basis of the phase pull-in operation due to the phase comparator 32. Therefore, the colour subcarrier synchronising APC 7B operates so as to synchronise the horizontal synchronising signal HSYNC obtained by the synchronising signal generator 7A with the burst signal of the reference pulse signal VDREF.

On the other hand, in the same way as in Figure 4, the system configuration is such that the phase adjuster 70 (including the phase shifter 71, the switching circuit 72 and the divider 73) is disposed between the signal generator 14 and the phase adjuster 15. Therefoer, when the switching circuit 72 is switched, it is possible coarsely to adjust the phases of the horizontal synchronising signal SYNCX the blank signal BLKX (HD and VD signals) and a field signal FIELD all obtained from the signal generator 14 by switching the switching circuit 72. Additionally, fine phase adjustment within one period of the burst signal (that is, within plus or minus 140 ns) can be made by the horizontal synchronising phase adjusting device 16.

However, in contrast to the arrangement shown in Figure 4, in the arrangement of Figure 9 the horizontal synchronising signal HSYNC sent to the colour subcarrier synchronising APC 7B can be taken from the input terminal of the phase comparator 12 on the oscillation frequency signal side. Therefore, if the adjusting device 16 is adjusted, the phase of the horizontal synchronising signal HSYNC does not change. Therefore, the point at which the phase of the horizontal synchronising signal HSYNC is synchronised with the reference horizontal synchronising signal HSYNCR is different from that shown in Figure 4.

Further, the output 27Q of the latch circuit 27 of the colour subcarrier synchronising APC 7B is not used directly as the read start pulse signal RZERO, but instead is supplied to a phase shifter 82 provided in a phase adjuster 81 and driven by the frequency output S21. In like mannr to the phase shifter 71 of the phase adjuster 70, the phase shifter 82 has a plurality of phase outputs having different phase shift values within one period of the burst signal. These phase outputs are selected by a switching circuit 83, the operation of which is linked with that of the switching circuit 72, and then supplied to a phase shifter 84.

In the phase shifter 84, the phase shift value (within plus or minus 140 ns) within one period of the burst signal is controlled by a control signal supplied from a phase adjust signal generator 85. The adjust signal CON2 of the subcarrier phase adjusting device 35 and the adjust signal CON3 of the hue adjusting device 44 are supplied to the phase adjust signal generator 85. When a predetermined phase difference is produced relative to the phase of the burst signal BURSTR obtained from the reference pulse signal VDREF by the adjust signals CON2 and CON3, a control signal corresponding to this phase shift value is supplied to the phase shifter 84 in order to shift the phase of the output 27Q of the latch circuit 27.

The output 27Q, the phase of which is thus adjusted by the phase adjuster 81, is supplied to an output latch circuit 90. The read subcarrier signal RSC is supplied as a drive signal to the output latch circuit 90. In this way, a read start pulse signal RZERO synchronised with the read subcarrier signal RSC is outputted from the output latch circuit 90.

In the arrangement shown in Figure 9, the colour subcarrier synchronising APC 7B synchronises the horizontal synchronising signal HSYNC, the frequency signal of which is in synchronism with the horizontal synchronising signal HSYNCR separated from the reference pulse signal VDREF, with the frequency output S21 synchronised with the burst signal BURSTR separated from the reference pulse signal VDREF on the basis of the APC loop in the comparator 28. Further, the APC 7B latches the phase which is the reference of the read start pulse by means of the latch circuit 27.

When the phase of the colour burst is adjusted by using the phase adjusting device 35 or the phase of the hue is adjusted by using the phase adjusting device 44, the latch output 27Q is shifted by the phase adjuster 81 by a phase shift value corresponding to that mentioned above. Therefore, the phase of the latch output 27Q is adjusted by the value corresponding to the phase differences produced in the read subcarrier signal RSC and the read clock signal RCK due to the phase adjusting devices 35 and 44, and is latched by the latch circuit 90 in synchronism with the read subcarrier signal RSC.

Here, the phase of the read start pulse signal RZERO is maintained while maintaining the phase pull-in status obtained in the colour subcarrier synchronising APC 7B. As a result, it is not necessary to readjust the colour subcarrier synchronising APC after the phase adjusting devices 35, 44 have been adjusted, in contrast to the system configuration as shown in Figure 2.

In the case of the arrangement shown in Figure 9, when the phase of the horizontal synchronising signal is adjusted in the synchronising signal generator 7A, since the phase shifter 71 and the switching circuit 72 are provided for adjusting the phase of the colour burst signal in units of periods and the phase shifter 82 and the switching circuit 83 are provided on the output side of the APC 7B so as to be linked with the phase shifter 71 and the switching circuit 72, even if the phase of the horizontal synchronising signal is adjusted by a phase shift value several times greater than the period of the colour subcarrier, it is possible securely to adjust the phase of the read start pulse signal RZERO.

In the state where the automatic phase controller 7B for colour subcarrier synchronisation locks the phase between the read horizontal synchronising signal HSYNC and the read subcarrier signal RSC in an optimum phase relationship, when the phase relationship between the read horizontal synchronising signal HSYNC and the read subcarrier signal RSC is offset by operation of the phase adjusting devices 16, 35, and 44 so as to deviate from the optimum phase relationship, since the offset can be cancelled out by the phase adjusting means 24 and 81 it is possible securely to maintain the optimum phase relationship locked by the automatic phase controller 7B for colour subcarrier synchronisation.

Therefore, when the phases of the read horizontal synchronising signal HSYNC and the read subcarrier signal RSC are adjusted by the phase adjusting devices, it is possible to obtain a predetermined phase with sufficient reproduction, whereby it is possible to obtain a good reproducible output image signal VD from the memory.

The embodiments of the present invention described above provide that, after the phases of the horizontal synchronising signal and the burst signal have been adjusted to the optimum phase in the colour subcarrier synchronising APC 7B, even if the phase of the horizontal synchronising signal, the burst signal or the chrominance signal of the output video signal is adjusted by any given phase shift value relative to the phase of the horizontal synchronising signal, the burst signal or the chrominance signal of the reference pulse signal VDREF, it is nonetheless possible to obtain a read start pulse generator by which it is possible securely to maintain the optimum phase synchronisation relationships between the horizontal synchronising signal and the burst signal without any need for any other complicated operations.

## Claims

1. A read start pulse generator (7B) of an automatic colour subcarrier synchronising phase controller type for receiving a read horizontal synchronising signal (HSYNC) and a read subcarrier signal (RSC) both adjustably phase-shifted by predetermined values from a reference horizontal synchronising singal (HSYNCR) and a reference burst signal (BURSTR) both separated from a reference pulse signal (VDREF), the read start pulse generator (7B) comprising:

    means (28) for effecting a comparison in phase between an output (MODH) of a timer (24) and the read subcarrier signal (RSC) after a predetermined timer time has elapsed from the read horizontal synchronising signal (HSYNC),

    means (27) for latching the timer time by the read subcarrier signal (RSC) while controlling the timer time so that a phase error signal (PER) between the timer output (MOD) and the read subcarrier signal (RSC) becomes zero in order to generate a read start pulse (RZERO) in synchronism with the read subcarrier signal (RSC), and

    means (65, 66) for adjusting the phase of the timer output (MODH) by cancelling phase offsets caused by the phase-adjusted read horizontal synchronising signal (HSYNC) and the phase-adjusted read subcarrier signal (RSC)

2. A read start pulse generator (7B) of an automatic subcarrier synchronising phase controller type for receiving a reference horizontal synchronising signal (HSYNCR) and a reference burst signal (BURSTR, S21) both separated from a reference pulse signal (VDREF), the read start pulse generator (7B) comprising:

    means (28) for effecting a comparison in phase between an output (MODH) of a timer (24) and the reference burst signal (S21) after a predetermined timer time has elapsed from the reference horizontal synchronising signal (HSYNCR),

    means (27) for latching the timer time in response to the burst signal (S21) while controlling the timer time so that a phase error signal (PER) between the timer output (MODH) and the reference burst signal (S21) becomes zero in order to generate a latch output (27Q), and

    means (81,85,90) for adjusting the phase of the latch output (27Q) by cancelling phase offsets caused by the phase-adjusted burst signal (CON2) and a hue adjust signal (CON3) before generating a read start pulse signal (RZERO) by latching the latch output (27Q) in response to a phase-adjusted read subcarrier signal (RSC)

3. A read clock generator (7) for a time base correcter, the read clock generator (7) comprising:

    a synchronising signal generator (7A) including a horizontal synchronsiation phase adjusting device (16), responsive to a reference pulse signal (VDREF) including a reference synchronising signal (HSYNCR), for generating a read synchronising signal (HSYNC) adjustably in phase relative to the reference synchronising signal (HSYNCR);

    a colour subcarrier signal generator (7C), including a subcarrier phase adjusting device (35), responsive to the reference pulse signal (VDREF) including a burst signal (BURSTR) for generating a burst signal (BURSTX) adjustably in phase relative to the reference burst signal (BURSTR);

    a read signal generator (7D), including a hue adjusting device (44), responsive to the adjusted burst signal (BURSTX) for generating a read subcarrier signal (RSC) and a read clock signal (RCK) both adjustably in phase relative to and synchronised with the adjusted burst signal (BURSTX); and

    a read start pulse generator (7B) of colour subcarrier synchronising phase controller type which comprises:

    (a) a switching circuit (22) responsive to the adjusted synchronising signal (HSYNC) for outputting a trigger signal, the phase of the trigger signal being delayed by half a period of the subcarrier signal (RSC) for each horizontal scanning line;

    (b) a timer circuit (24), including a horizontal synchronisation colour subcarrier phase adjusting device (58), responsive to the trigger signal for outputting an adjustable timer output (MODH), the timer time thereof being approximate to a timing at which a read start pulse signal (RZERO) is generated;

(c) a latch circuit (27) responsive to the timer output (MODH) for latching a logic level of the timer output (MODH) at a timing at which the adjusted burst signal (BURST) is of zero voltage level and for generating a read start pulse signal (RZERO) in synchronism with the read subcarrier signal (RSC);

(d) a phase comparator (28) for effecting a comparison in phase between the timer output (MODH) and the read subcarrier signal (RSC) and outputting a phase error signal (PER) representing any phase difference between the timer output and the read subcarrier signal to the timer circuit (24) to control the timer time so that the phase error signal (PER) becomes zero; and

(e) means (65,66) for automatically adjusting the phase of the timer output (MODH) by cancelling a phase offset between the read horizontal synchronising signal (HSYNC) and the read subcarrier signal (RSC) due to the adjusted read horizontal synchronising signal (HSYNC) and the adjusted read subcarrier signal (RSC);

whereby once the timer circuit (24) is adjusted with the horizontal synchronisation colour subcarrier phase adjusting device (58), it is not necessary to readjust the adjusted timer time even after the horizontal synchronising phase adjusting device (16), the subcarrier phase adjusting device (35), and the hue adjusting device (44) have been operated to effect adjustment.

4. A read clock generator according to claim 3, wherein the means (65,66) for automatically adjusting the phase of the timer output (MODH) comprises:

a phase adjust signal generator (66) connected to the horizontal synchronising phase adjusting device (16), the subcarrier phase adjusting device (16), the subcarrier phase adjusting device (35) and the hue adjusting device (44) for generating a phase control signal (CONT) corresponding to each phase change caused by the adjusting devices (16, 35, 44); and

a phase adjuster (65) connected between the switching circuit (22) and the timer circuit (24) for compensating for phase between the horizontal synchronising signal (HSYNC) and the timer output (MODH) in response to the phase control signal (CONT).

5. A read clock generator according to claim 4, comprising a phase adjuster (70) incorporated in the synchronising signal generator (7A) for roughly adjusting a phase difference between the reference horizontal synchronising signal (HSYNCR) and the horizontal synchronising signal (HSYNC) to an extent beyond one period of the burst signal, the horizontal synchronising signal adjusting device (16) being usable as a fine adjusting device.

6. A read clock generator (7) for a time case corrector, the read clock generator (7) comprising:

a synchronising signal generator (7A) including a horizontal synchronisation phase adjusting device (16), responsive to a reference pulse signal (VDREF) including a reference synchronising signal (HSYNCR), for generating a read synchronising signal (HSYNC) synchronised with the reference synchronising signal (HSYNCR);

a colour subcarrier signal generator (7C) including a subcarrier phase adjusting device (35), responsive to the reference pulse signal (VDREF) including a burst signal (BURSTR) for generating a burst signal (BURSTX) adjustably in phase relative to the reference burst signal (BURSTR) and a burst signal (S21) synchronised with the reference burst signal (BURSTR);

a read signal generator (7D), including a hue adjusting device (44), responsive to the adjusted burst signal (BURSTX) for generating a read subcarrier signal (RSC) and a read clock signal (RCK) both adjustably in phase relative to and synchronised with the adjusted burst signal (BURSTX); and

a read start pulse generator (7B) of colour subcarrier synchronising phase controller type which comprises:

(a) a switching circuit (22) responsive to the synchronising signal (HSYNC) for outputting a trigger signal, the phase of the trigger signal being delayed by half a period of the subcarrier signal (RSC) for each horizontal scanning line;

(b) a timer circuit (24), including a horizontal synchronisation colour subcarrier phase adjusting device (58), responsive to the trigger signal for outputting an adjustable timer output (MODH), the timer time thereof being approximate to a timing at which a read start pulse signal (RZERO) is generated;

(c) a latch circuit (27) responsive to the timer output (MODH) for latching a logic level of the timer output (MODH) at a timing at which the burst signal (S21) is of zero voltage level and for generating a latch output (27Q);

(d) a phase comparator (28) for effecting a comparison in phase between the timer output (MODH) and the burst signal (S21) and outputting a phase error signal (PER) representing any phase difference between the timer output and the read subcarrier signal to the timer circuit (24) to control the timer time so that the phase error signal (PER) becomes zero; and

(e) means (81,85) for automatically adjusting the phase of the latch output (27Q) by a phase-shift value caused by the subcarrier phase adjusting device (35) and the hue adjusting device (44) or corresponding to phase shift in the read subcarrier signal (RSC) and the read clock signal (RCK),

whereby once the timer circuit (24) is adjusted with the horizontal synchronisation colour subcarrier phase adjusting device (58), it is not necessary to readjust the adjusted timer time even after the horizontal synchronising phase adjusting device (16), the subcarrier phase adjusting device (35) and the hue adjusting device (44) have been operated to effect adjustment.

7. A read clock generator according to claim 6, wherein the means (81,85) for automatically adjusting the phase of the latch output (27Q) comprises:

a phase adjust signal generator (85) connected to the subcarrier phase adjusting device (35) and the hue adjusting device (44) for generating a phase control signal corresponding to each phase change caused by the adjusting devices (35,44);

a phase adjuster (81) connected to the latch circuit (27) for compensating for phase shift of the latch output (27Q); and

a second latch circuit (90) connected to the phase adjuster (81) for latching the compensated latch output (27Q) in response to the read subcarrier signal (RSC) to generate a read start pulse signal (RZERO).

8. A read clock generator according to claim 7, which comprises a second phase adjuster (70) incorporated in the synchronising signal generator (7A) for roughly adjusting a phase difference between the reference horizontal synchronising signal (HSYNCR) and the horizontal synchronising signal (HSYNC) to an extent beyond one period of the burst signal, the horizontal synchronising signal adjusting device (16) being usable as a fine adjusting device, and the second phase adjuster (70) being linked for switching operation with the first-mentioned phase adjuster (81).

**Revendications**

1. Générateur d'impulsion de démarrage de lecture (7B) d'un type de contrôleur de phase de synchronisation de la sous- porteuse couleur à synchronisation automatique pour recevoir un signal de synchronisation horizontale de lecture (HSYNC) et un signal de sous- porteuse de lecture (RSC) , tous les deux déphasés de manière ajustable par des valeurs prédéterminées par rapport à un signal de synchronisation horizontale de référence (HSYNCR) et à un signal couleur de référence (BURSTR), tous les deux séparés d'un signal impulsionnel de référence (VDREF), le générateur d'impulsion de démarrage de lecture (7B) comprenant :

- des moyens (28) pour effectuer la comparaison en phase entre une sortie (MODH) d'une horloge (24) et le signal de sous- porteuse de lecture (RSC) après qu'une durée d'horloge prédéterminée se soit écoulée à partir du signal de synchronisation horizontale de lecture (HSYNC),

- des moyens (27) pour verrouiller la durée d'horloge sur le signal de sous- porteuse de lecture (RSC) tandis que l'on contrôle la durée d'horloge de telle sorte qu'un signal d'erreur de phase (PER) entre la sortie d'horloge (MOD) et le signal de sous- porteuse de lecture (RSC) tende vers zéro afin de générer une impulsion de démarrage de lecture (RZERO) en synchronisme avec le signal de sous-porteuse de lecture (RSC), et

- des moyens (65, 66) pour ajuster la phase de la sortie d'horloge (MODH) en annulant les décalages de phase provoqués par le signal de synchronisation horizontale de lecture à phase ajustée (HSYNC) et le signal de sous-porteuse à phase ajustée (RSC).

2. Générateur d'impulsion de démarrage de lecture (7B) d'un type à contrôleur de phase à synchronisation automatique de sous- porteuse destinée à recevoir un signal de synchronisation horizontale de référence (HSYNCR) et un signal couleur de référence (BURSTR, S21), tous les deux séparés depuis un signal impulsionnel de référence (VDREF), le générateur d'impulsion de démarrage de lecture (7B) comprenant :

- des moyens (28) pour effectuer la comparaison en phase entre une sortie (MODH) d'une horloge et le signal couleur de référence (S21) après qu'une durée d'horloge prédéterminée se soit écoulée à partir du signal de synchronisation horizontale de référence (HSYNCR),

- des moyens (27) pour verrouiller la durée d'horloge en réponse au signal couleur (S21) tout en contrôlant la durée d'horloge de telle sorte qu'un signal d'erreur de phase (PER) entre la sortie d'horloge (MODH) et le signal couleur de référence (S21) tende vers zéro afin de générer une sortie de bascule de verrouillage (27Q), et
- des moyens (81, 85, 90) pour ajuster la phase de la sortie (27Q) de bascule de verrouillage en annulant les décalages de phase causés par le signal couleur de phase ajustée (CON2) et un signal d'ajustement de teinte (CON3) avant de générer un signal d'impulsion de démarrage de lecture (RZERO) en mémorisant la sortie (27Q) de bascule de verrouillage en réponse à un signal de sous- porteuse de lecture de phase ajustée (RSC).

3. Générateur d'horloge de lecture (7) pour un correcteur de base de temps, le générateur d'horloge de lecture (7) comprenant :

- un générateur de signal de synchronisation (7A) comprenant un dispositif (16) d'ajustement de phase de synchronisation horizontale, sensible à un signal impulsionnel de référence (VDREF), comprenant un signal de synchronisation de référence (HSYNCR), pour générer un signal de synchronisation de lecture (HSYNC) ajustable en phase par rapport au signal de synchronisation de référence (HSYNCR) ;
- un générateur de signal de sous- porteuse couleur (7C), comprenant un dispositif d'ajustement de phase de sous- porteuse (35) sensible au signal impulsionnel de référence (VDREF) comprenant un signal couleur (BURSTR) pour générer un signal couleur (BURSTX) ajustable en phase par rapport au signal couleur de référence (BURSTR) ;
- un générateur de signal de lecture (7D), comprenant un dispositif d'ajustement de la teinte (44), sensible au signal couleur ajusté (BURSTX) pour générer un signal de sous- porteuse de lecture (RSC) et un signal d'horloge de lecture (RCK), tous les deux ajustables en phase par rapport à et synchronisés sur le signal couleur ajusté (BURSTX) ; et
- un générateur d'impulsion de démarrage de lecture (7B) du type à contrôleur de phase de synchronisation de sous- porteuse couleur qui comporte :

a) un circuit de commutation (22) sensible au signal de synchronisation ajustée (HSYNC) pour fournir en sortie un signal de déclenchement, la phase du signal de déclenchement étant retardée d'une demie- période du signal de sous- porteuse (RSC) à chaque ligne de balayage horizontal ;

b) un circuit d'horloge (24), comprenant un dispositif d'ajustement de phase de la sous- porteuse couleur en synchronisation horizontale (58), sensible au signal de déclenchement pour fournir en sortie une sortie d'horloge ajustable (MODH), le séquencement d'horloge y étant approché par un séquencement sous lequel un signal d'impulsion de démarrage de lecture (RZERO) est généré ;

c) une bascule ou circuit de bascules (27), sensible à la sortie d'horloge (MODH) pour verrouiller ou mémoriser un niveau logique de la sortie d'horloge (MODH) sous un séquencement sous lequel le signal couleur ajusté (BURST) est à un niveau de zéro volts et pour générer un signal d'impulsion de démarrage de lecture (RZERO) en synchronisme avec le signal (RSC) de sous- porteuse de lecture ;

d) un comparateur de phase (28) pour effectuer une comparaison en phase entre la sortie d'horloge (MODH) et le signal de sous- porteuse de lecture (RSC) et fournir en sortie un signal d'erreur de phase (PER) représentant toute différence de phase entre la sortie d'horloge et le signal de sous- porteuse de lecture au circuit d'horloge (24) pour contrôler le séquencement d'horloge de telle sorte que le signal d'erreur de phase (PER) soit annulé ; et

e) des moyens (65, 66) pour ajuster automatiquement la phase de la sortie d'horloge (MODH) en annulant un déphasage ou un décalage de phase entre le signal de synchronisation horizontale de lecture (HSYNC) et le signal de sous- porteuse de lecture (RSC) dû au signal de synchronisation horizontale de lecture ajustée (HSYNC) et au signal de sous- porteuse de lecture ajustée (RSC) ;

de façon à ce que, une fois le circuit d'horloge (24) a été ajusté par le dispositif (58) d'ajustement de la phase de la sous- porteuse couleur en synchronisation horizontale, il ne soit plus nécessaire de réajuster le séquencement d'horloge ajusté même après qu'on ait actionné le dispositif (16) d'ajustement de phase de synchronisation horizontale, le dispositif (35) d'ajustement de phase de sous-porteuse et le dispositif (44) d'ajustement de la teinte pour effectuer les ajustements.

4. Générateur d'horloge de lecture selon la revendication 3, dans lequel les moyens (65, 66) pour ajuster automatiquement la phase de la sortie d'horloge (MODH) comporte :

- un générateur (66) de signal d'ajustement de phase connecté au dispositif (16) d'ajustement de phase de synchronisation horizontale, au dispositif (16) d'ajustement de phase de la sous-porteuse, au dispositif (35) d'ajustement de la phase de la sous-porteuse et au dispositif (44) d'ajustement de la teinte pour générer un signal de commande de phase (CONT) correspondant à chaque changement de phase provoqué par des dispositifs d'ajustement (16, 35, 44) ; et

- un ajusteur de phase (65) connecté entre le circuit de commutation (22) et le circuit d'horloge (24) pour compenser les phases entre le signal de synchronisation horizontale (HYNC) et la sortie d'horloge (MODH) en réponse au signal de commande de phase (CONT).

5. Générateur d'horloge de lecture selon la revendication 4, comprenant un ajusteur de phase (70) incorporé dans le générateur de signal de synchronisation (7A) pour ajuster grossièrement la différence de phase entre le signal (HYNCR) de synchronisation horizontale de référence et le signal (HSYNC) de synchronisation horizontale d'une quantité au-delà d'une période du signal couleur, le dispositif d'ajustement du signal de synchronisation horizontale (16) étant utilisable comme dispositif d'ajustement fin.

6. Générateur d'horloge de lecture (7) pour un correcteur de base de temps, le générateur d'horloge de lecture (7) comprenant :

- un générateur de signal de synchronisation (7A) comprenant un dispositif (16) d'ajustement de phase de synchronisation horizontale, sensible à un signal impulsionnel de référence (VDREF), comprenant un signal de synchronisation de référence (HSYNCR), pour générer un signal de synchronisation de lecture (HSYNC) synchronisé sur le signal de synchronisation de référence (HSYNCR) ;

- un générateur de signal de sous-porteuse couleur (7C), comprenant un dispositif d'ajustement de phase de sous-porteuse (35), sensible au signal impulsionnel de référence (VDREF) comprenant un signal couleur (BURSTR) pour générer un signal couleur (BURSTX) ajustable en phase par rapport au signal couleur de référence (BURSTR) et à un signal couleur (S21), synchronisé sur le signal couleur de référence (BURSTR) ;

- un générateur de signal de lecture (7D), comprenant un dispositif d'ajustement de la teinte (44), sensible au signal couleur ajusté (BURSTX) pour générer un signal de sous-porteuse de lecture (RSC) et un signal d'horloge de lecture (RCK), tous les deux ajustables en phase par rapport à et synchronisés sur le signal couleur ajusté (BURSTX) ; et

- un générateur d'impulsion de démarrage de lecture (7B) du type à contrôleur de phase de synchronisation de sous-porteuse couleur qui comporte :

a) un circuit de commutation (22) sensible au signal de synchronisation (HSYNC) pour fournir en sortie un signal de déclenchement, la phase du signal de déclenchement étant retardée d'une demi-période du signal de sous-porteuse (RSC) à chaque ligne de balayage horizontal ;

b) un circuit d'horloge (24), comprenant un dispositif d'ajustement de phase de la sous-porteuse couleur en synchronisation horizontale (58), sensible au signal de déclenchement pour fournir en sortie une sortie d'horloge ajustable (MODH), le séquencement d'horloge y étant approché par un séquencement sous lequel un signal d'impulsion de démarrage de lecture (RZERO) est généré ;

c) une bascule ou circuit de bascules (27), sensible à la sortie d'horloge (MODH) pour verrouiller ou mémoriser un niveau logique de la sortie d'horloge (MODH) sous un séquencement sous lequel le signal couleur (S21) est à un niveau de zéro volts et pour générer une sortie de bascule (27Q) ;

d) un comparateur de phase (28) pour effectuer une comparaison en phase entre la sortie d'horloge (MODH) et le signal signal couleur (S21) et fournir en sortie un signal d'erreur de phase (PER) représentant toute différence de phase entre la sortie d'horloge et le signal de sous-porteuse de lecture au circuit d'horloge (24) pour contrôler le séquencement d'horloge de telle sorte que le signal d'erreur de phase (PER) soit annulé ; et

e) des moyens (81, 85) pour ajuster automatiquement la phase de la sortie de bascule (27Q) par une valeur de déphasage provoquée par le dispositif (35) d'ajustement de phase de la sous- porteuse et par le dispositif (44) d'ajustement de la teinte ou correspondant au déphasage sur le signal (RSC) de sousporteuse de lecture et sur le signal d'horloge de lecture (RCK) ;

de façon à ce que, une fois le circuit d'horloge (24) a été ajusté par le dispositif (58) d'ajustement de la phase de la sous- porteuse couleur en synchronisation horizontale, il ne soit plus nécessaire de réajuster le séquencement d'horloge ajusté même après qu'on ait actionné le dispositif (16) d'ajustement de phase de synchronisation horizontale, le dispositif (35) d'ajustement de phase de sous- porteuse et le dispositif (44) d'ajustement de la teinte pour effectuer les ajustements.

7. Générateur d'horloge de lecture selon la revendication 6, dans lequel les moyens (81, 85) pour ajuster automatiquement la phase de la sortie de bascule (27Q) comporte :
   - un générateur de signal d'ajustement de phase (85) connecté au dispositif d'ajustement de la phase de la sous-porteuse (35) et au dispositif (44) d'ajustement de la teinte pour générer un signal de commande de phase correspondant à chaque changement de phase provoqué par les dispositifs d'ajustement (35, 44) ;
   - un ajusteur de phase (81) connecté au circuit de bascules (27) pour compenser les déphasages de la sortie de bascule (27Q) ; et
   - un second circuit de bascules ou bascule (90), connecté à l'ajusteur de phase (81) pour mémoriser la sortie compensée (27Q) en réponse au signal de sousporteuse de lecture (RSC) pour générer un signal d'impulsion de démarrage de lecture (RZERO).

8. Générateur d'horloge de lecture selon la revendication 7, qui comporte un second ajusteur de phase (70) incorporé dans le générateur de signal de synchronisation (7A) pour ajuster grossièrement la différence de phase entre le signal de synchronisation horizontale de référence (HSYNCR) et le signal de synchronisation horizontale (HSYNC) d'une quantité dépassant une période du signal couleur, le dispositif d'ajustement du signal de synchronisation horizontale (16) étant utilisable comme dispositif d'ajustement fin, et le second ajusteur de phase (70) étant lié pour fonctionner en commutation avec le premier mentionné des ajusteurs de phase (81).

**Ansprüche**

1. Lese-Startimpuls-Generator (7B) mit automatischer Steuerung der Farbhilfsträger-Synchronisier-Phase zur Aufnahme eines horizontalen Lese-Synchronisiersignals (HSYNC) und eines Lese-Hilfsträgersignals (RSC), die beide um vorbestimmte Werte justierbar phasenverschoben sind gegenüber einem Horizontal-Referenz-Synchronisiersignal (HSYNCR) und einem Referenz-Burstsignal (BURSTR), die beide von einem Referenz-Impulssignal (VDREF) abgetrennt sind,

   wobei der Lese-Startimpuls-Generator (7B) aufweist:

   eine Einrichtung (28) zur Durchführung eines Phasenvergleichs zwischen dem Ausgangssignal (MODH) eines Zeitgebers (24) und dem Lese-Hilfsträgersignal (RSC) nach Ablauf einer vorbestimmten Zeitgeber-Zeit nach dem Auftreten des horizontalen Lese-Synchroniersignals (HSYNC),

   eine Einrichtung (27) zum Verriegeln der Zeitgeber-Zeit durch das Lese-Hilfsträgersignal (RSC), während die Zeitgeber-Zeit so gesteuert wird, daß ein Phasenfehlersignal (PER) zwischen dem Zeitgeber-Ausgangssignal (MOD) und dem Lese-Hilfsträgersignal (RSC) zu Null wird, um synchron mit dem Lese-Hilfsträgersignal (RSC) einen Lese-Startimpuls (RZERO) zu erzeugen, und

   eine Einrichtung (65, 66) zum Justieren der Phase des Zeitgeber-Ausgangssignals (MODH) durch das Beseitigen von durch das phasenjustierte Horizontal-Lese-Synchronisiersignal (HSYNC) und das phasenjustierte Lese-Hilfsträgersignal (RSC) verursachten Phasenversetzungen.

2. Lese-Startimpuls-Generator (7B) mit automatischer Steuerung der Farbhilfsträger-Synchronisier-Phase zur Aufnahme eines horizontalen Referenz- -Synchronisiersignals (HSYNCR) und eines Referenz-Burstsignals (BURSTR, S21), die beide von einem Referenz-Impulssignal (VDREF) abgetrennt sind,

   wobei der Lese-Startimpuls-Generator (7B) aufweist:

eine Einrichtung (28) zur Durchführung eines Phasenvergleichs zwischen dem Ausgangssignal (MODH) eines Zeitgebers (24) und dem Referenz-Burstsignal (S21) nach Ablauf einer vorbestimmten Zeitgeber-Zeit nach dem Auftreten des horizontalen Referenz-Synchronisiersignals (HSYNCR),

eine Einrichtung (27) zum Verriegeln der Zeitgeber-Zeit nach Maßgabe des Burstsignals (S21), während die Zeitgeber-Zeit so gesteuert wird, daß das Phasenfehlersignal (PER) zwischen dem Zeitgeber-Ausgangssignal (MODH) und dem Referenz-Burstsignal (S21) zu Null wird, und zur Erzeugung eines entsprechenden Ausgangssignals (27Q) der Verriegelungsschaltung und

eine Einrichtung (81, 85, 90) zum Justieren der Phase des Ausgangssignals (27Q) der Verriegelungsschaltung durch Beseitigen der durch das phasenjustierte Burstsignal (CON2) und ein Farbart-Einstellsignal (CON3) verursachten Phasenversetzungen, bevor durch das Verriegeln des Ausgangssignals (27Q) der Verriegelungsschaltung nach Maßgabe des phasenjustierten Lese-Hilfsträgersignals (RSC) ein Lese-Startimpulssignal erzeugt wird.

3. Lesetaktgenerator (7) für eine Zeitbasis-Korrektureinrichtung mit

einem Synchronisiersignalgenerator (7A) mit einer Einrichtung (16) zum Justieren der Horizontal-Synchronisier-Phase, der auf ein ein Referenz-Synchronisiersignal (HSYNCR) enthaltendes Referenz-Impulssignal (VDREF) anspricht, um ein Lese-Synchronisiersignals (HSYNC) zu erzeugen, dessen Phase gegenüber dem Referenz-Synchronisiersignal (HSYNCR) justierbar ist,

einem Farbhilfsträger-Signalgenerator (7C) mit einer Einrichtung (35) zum Justieren der Hilfsträger-Phase, der auf das ein Burstsignal (BURSTR) enthaltende Referenz-Impulssignal (VDREF) anspricht, um ein Burstsignal (BURSTX) zu erzeugen, dessen Phase gegenüber dem Referenz-Burstsignal (BURSTR) justierbar ist,

einem Lesesignalgenerator (7D) mit einer Einrichtung (44) zum Justieren der Farbart, der auf das justierte Burstsignal (BURSTX) anspricht, um ein Lese-Hilfsträgersignal (RSC) und ein Lesetaktsignal (RCK) zu erzeugen, die beide in ihrer Phase relativ zu dem justierten Burstsignal (BURSTX) justierbar und mit diesem synchronisiert sind,

und einem Lese-Startimpulsgenerator (7B) mit Farbhilfsträger-Synchronisier-Phasensteuerung, der folgende Teile aufweist:

(a) einen auf das justierte Synchronisiersignal (HSYNC) ansprechenden Schalterkreis (22) zur Ausgabe eines Triggersignals bei jeder horizontalen Abtastzeile, wobei die Phase des Triggersignals um eine halbe Periode des Hilfsträgersignals (RSC) verzögert ist,

(b) eine auf das Triggersignal ansprechende und eine Einrichtung (58) zum Justieren der Horizontal-Synchronisier-Farbhilfsträger-Phase aufweisende Zeitgeberschaltung (24) zur Ausgabe eines justierbaren Zeitgeber-Ausgangssignals (MODH), wobei die Zeitgeber-Zeit annähernd der Zeit entspricht, in der ein Lese-Startimpulssignal (RZERO) erzeugt wird,

(c) eine auf das Zeitgeber-Ausgangssignal (MODH) ansprechende Verriegelungsschaltung (27) zum Verriegeln des logischen Pegels des Zeitgeber-Ausgangssignal (MODH) in dem Zeitpunkt, in dem das justierte Burstsignal (BURST) Nullpegel hat, und zur Erzeugung eines Lese-Startimpulssignals (RZERO) synchron mit dem Lese-Hilfsträgersignal (RSC),

(d) einen Phasenvergleicher (28) zur Durchführung eines Phasenvergleichs zwischen dem Zeitgeber-Ausgangssignal (MODH) und dem Lese-Hilfsträgersignal (RSC) und zur Ausgabe eines die Phasendifferenz zwischen dem Zeitgeber-Ausgangssignal und dem Lese-Hilfsträgersignal repräsentierenden Phasenfehlersignals (PER) an die Zeitgeberschaltung (24) zur Steuerung der Zeitgeber-Zeit derart, daß das Phasenfehlersignal (PER) zu Null wird, und

(e) eine Einrichtung (65, 66) zum automatischen Justieren der Phase des Zeitgeber-Ausgangssignals (MODH) durch das Beseitigen eines durch das justierte Horizontal-Lese-Synchronisiersignal (HSYNC) und das justierte Lese-Hilfsträgersignal (RSC) verursachten Phasenversatzes zwischen dem Horizontal-Lese-Synchronisiersignal (HSYNC) und dem Lese-Hilfsträgersignal (RSC),

wodurch dann, wenn die Zeitgeberschaltung (24) einmal mit der Einrichtung (58) zum Justieren der Horizontal-Synchronisier-Farbhilfsträger-Phase justiert ist, ein Neujustieren der Zeitgeber-Zeit selbst nach dem Justieren der Einrichtung (16) zum Justieren der Horizontal-Synchronisier-Phase, der Einrichtung (35) zum Justieren der Hilfsträger-Phase und der Einrichtung (44) zum Justieren der Farbart nicht erforderlich ist.

4. Lesetaktgenerator nach Anspruch 3, bei dem die Einrichtung (65, 66) zum automatischen Justieren der Phase des Zeitgeber-Ausgangssignals (MODH) folgende Teile aufweist:

einen mit der Einrichtung (16) zum Justieren der Horizontal-Synchronisier-Phase, der Einrichtung (35) zum Justieren der Hilfsträger-Phase und der Einrichtung (44) zum Justieren der Farbart verbundenen Phasen-Justiersignalgenerator (66) zur Erzeugung eines Phasensteuersignals (CONT), das den einzelnen durch die die Justier-Einrichtungen (16, 35, 44) verursachten Phasenänderungen entspricht, und

einen zwischen dem Schalterkreis (22) und der Zeitgeberschaltung (24) angeordneten Phasen-Einsteller (65) zur Phasenkompensation zwischen dem Horizontal-Synchronisiersignal (HSYNC) und dem Zeitgeber-Ausgangssignal (MODH) nach Maßgabe des Phasensteuersignals (CONT).

5. Lesetaktgenerator nach Anspruch 4, mit einem in dem Synchronisiersignalgenerator (7A) enthaltenen Phasen-Einsteller (70) zur Grobjustierung einer Phasendifferenz zwischen dem Horizontal-Referenz-Synchronisiersignal (HSYNCR) und dem HorizontalSynchronisiersignal (HSYNC) bis zu einem über einer Periode des Burstsignals liegenden Wert, wobei die Einrichtung (16) zum Justieren der Horizontal-Synchronisiersignals als Einrichtung zur Feinjustierung verwendbar ist.

6. Lesetaktgenerator (7) für eine Zeitbasis-Korrektureinrichtung mit

einem Synchronisiersignalgenerator (7A) mit einer Einrichtung (16) zum Justieren der Horizontal-Synchronisier-Phase, der auf ein ein Referenz-Synchronisiersignal (HSYNCR) enthaltendes Referenz-Impulssignal (VDREF) anspricht, um ein Lese-Synchronisiersignals (HSYNC) zu erzeugen, dessen Phase gegenüber dem Referenz-Synchronisiersignal (HSYNCR) justierbar ist,

einem Farbhilfsträger-Signalgenerator (7C) mit einer Einrichtung (35) zum Justieren der Hilfsträger-Phase, der auf das ein Burstsignal (BURSTR) enthaltende Referenz-Impulssignal (VDREF) anspricht, um ein Burstsignal (BURSTX) zu erzeugen, dessen Phase gegenüber dem Referenz-Burstsignal (BURSTR) justierbar ist, und ein Burstsignal (S21), das mit dem Referenz-Burstsignal (BURSTR) synchronisiert ist,

einem Lesesignalgenerator (7D) mit einer Einrichtung (44) zum Justieren der Farbart, der auf das justierte Burstsignal (BURSTX) anspricht, um ein Lese-Hilfsträgersignal (RSC) und ein Lesetaktsignal (RCK) zu erzeugen, die beide in ihrer Phase relativ zu dem justierten Burstsignal (BURSTX) justierbar und mit diesem synchronisiert sind, und

einem Lese-Startimpulsgenerator (7B) mit automatischer Farbhilfsträger-Synchronisier-Phasensteuerung, der folgende Teile aufweist:

(a) einen auf das Synchronisiersignal (HSYNC) ansprechenden Schalterkreis (22) zur Ausgabe eines Triggersignals bei jeder horizontalen Abtastzeile, wobei die Phase des Triggersignals um eine halbe Periode des Hilfsträgersignals (RSC) verzögert ist,

(b) eine eine Einrichtung (58) zum Justieren der Horizontal-Synchronisier-Farbhilfsträger-Phase aufweisende und auf das Triggersignal ansprechende Zeitgeberschaltung (24) zur Ausgabe eines justierbaren Zeitgeber-Ausgangssignals (MODH), wobei die Zeitgeber-Zeit annähernd der Zeit entspricht, in der ein Lese-Startimpulssignal (RZERO) erzeugt wird,

(c) eine auf das Zeitgeber-Ausgangssignal (MODH) ansprechende Verriegelungsschaltung (27) zum Verriegeln des logischen Pegels des Zeitgeber-Ausgangssignal (MODH) in dem Zeitpunkt, in dem das Burstsignal (S21) Nullpegel hat, und zur Erzeugung eines entsprechenden Ausgangssignals (27Q) der Verriegelungsschaltung,

(d) einen Phasenvergleicher (28) zur Durchführung eines Phasenvergleichs zwischen dem Zeitgeber-Ausgangssignal (MODH) und dem Burstsignal (S21) und zur Ausgabe eines die Phasendifferenz zwischen dem Zeitgeber-Ausgangssignal und dem Lese-Hilfsträgersignal repräsentierenden Phasenfehlersignals (PER) an die Zeitgeberschaltung (24) zur Steuerung der Zeitgeber-Zeit derart, daß das Phasenfehlersignal (PER) zu Null wird, und

(e) eine Einrichtung (81, 85) zum automatischen Justieren der Phase des Ausgangssignals (27Q) der Verriegelungsschaltung um einen von der Einrichtung (35) zum Justieren der Hilfsträgerphase und der Einrichtung (44) zum Justieren der Farbart verursachten oder der Phasenverschiebung in dem Lese-Hilfsträgersignal (RSC) und dem Lesetaktsignal entsprechenden Phasenverschiebungswert,

wodurch dann, wenn die Zeitgeberschaltung (24) einmal mit der Einrichtung (58) zum Justieren der Horizontal-Synchronisier-Farbhilfsträger-Phase justiert ist, ein Neujustieren der Zeitgeber-Zeit selbst nicht erforderlich ist, nachdem die Einrichtung (16) zum Justieren der Horizontal-Synchronisier-Phase, die Einrichtung (35) zum Justieren der Hilfsträger-Phase und die Einrichtung (44) zum Justieren der Farbart zur Durchführung der Justierung betätigt wurden

7.   Lesetaktgenerator nach Anspruch 6, bei dem die Einrichtung (81, 85) zum automatischen Justieren der Phase des Ausgangssignals (27Q) der Verriegelungsschaltung folgende Teile aufweist:

einen mit der Einrichtung (35) zum Justieren der Hilfsträger-Phase und der Einrichtung (44) zum Justieren der Farbart verbundenen Phasen-Justiersignalgenerator (85) zur Erzeugung eines Phasensteuersignals, das den einzelnen durch die die Justier-Einrichtungen (35, 44) verursachten Phasenänderungen entspricht,

einen mit der Verriegelungsschaltung (27) verbundenen Phasen-Einsteller (81) zur Kompensation der Phasenverschiebung des Ausgangssignals (27Q) der Verriegelungsschaltung und

eine mit dem Phasen-Einsteller (81) verbundene zweite Verriegelungsschaltung (90) zum Verriegeln des kompensierten Ausgangssignals (27Q) der Verriegelungsschaltung nach Maßgabe des Lese-Hilfsträgersignals (RCS) und zur Erzeugung eines Lese-Startimpulssignals (RZERO).

8.   Lesetaktgenerator nach Anspruch 7, mit einem in dem Synchronisiersignalgenerator (7A) enthaltenen zweiten Phasen-Einsteller (70) zur Grobjustierung der Phasendifferenz zwischen dem horizontalen Referenz-Synchronisiersignal (HSYNCR) und dem horizontalen Synchronisiersignal (HSYNC) bis zu einem über einer Periode des Burstsignals liegenden Wert, wobei die Einrichtung (16) zum Justieren des Horizontal-Synchronisiersignals als Einrichtung zur Feinjustierung verwendbar ist und der zweite Phasen-Einsteller (70) zur Schaltoperation mit dem ersten Phasen-Einsteller (81) gekoppelt ist.

# FIG.1

EP 0 193 328 B1

EP 0 193 328 B1

# FIG.2A

SYNC. SIG. GENERATOR

7A

VDREF

To 13
PHE 1

| 11 | 12 | 15 | HSYNC |
| SYNC. SEPARATOR | PHASE COMPARATOR | PHASE ADJUSTER | FROM 14 |

HSYNCR

16

7C

GATE

PHE 2

| 31 | 32 | 34 | 33 | BCOSC | 26 |
| BURST SEPARATOR | PHASE COMPARATOR | PHASE ADJUSTER | 1/4 DIV. | | COLOUR SUBCARRIER OSC. |

BURSTR

BURSTX

35

PHASE ADJUSTER — To 42

COLOUR SUBCARRIER SIG GENERATOR

44

41

7D

45

VER

READ SIG GENERATOR

# FIG.2B

READ CLOCK GENERATOR

# FIG.3

SIG. WAVEFORMS OF EACH SECTION IN FIG. 2

# FIG. 4 A

# FIG. 4 B

SYNCX, BLKX (HD, VD)

FROM
12

HSYNC    14    HCOSC    13    7A    7

To71 ←    SIG.    HOR. SYNC.    7B
To73 ←    GENERATOR    FREQ. OSC.

COLOUR SUBCARRIER
SYNC. APC    27

23    22    65    55    24    MODH

P2    PHASE    MULTI.    LATCH
P1    ADJUST

RZERO

PHASE    67    57    28    59
ADJUST SIG.    +    CON 4
GENERATOR    CONT    PER    PHASE    WINDOW
COMPARATOR    DETECTOR

66    58    51    60
TIMER CKT.    52    APC RETURN
LEVEL
DETECTOR    RSC

53    54

ADJ

FROM    42
41 →    4
MULTIPLIER

43    RCK

1/4 DIV    7D

READ SIG GENERATOR

# FIG.5

# FIG.6

15 PHASE ADJUSTER

75

```
┌─────────────────────┐
│  SAWTOOTH    │  S1    76
│  WAVE        │  ─────┐ +
│  GENERATOR   │       ▷──────►
│              │       │     S2
└─────────────────────┘
SO
```

16    CON 1

34(41,65)

77

```
┌─────────────────────┐
│  SAWTOOTH    │  S11   78
│  WAVE        │  ─────┐ +
│  GENERATOR   │       ▷──────►
│              │       │     S12
└─────────────────────┘
S10
```

35(44,58)    CON 2 (CON 3, CON 4)

# FIG.7

(A)    H        H        S1
       CON 1

(B)  1                    S2
     0

# FIG.8

CON 2 (CON 3, CON 4)

(A)  Tsc        S11

(B)  1                    S12
     0

# FIG.9A

# FIG. 9 B

SYNCX, BLKX (HD, VD), FIELD

FROM 12

7A

14  SIG. GENERATOR  HCOSC  13  HOR. SYNC. FREQ. OSC.

To73

27Q  82  83  81

FROM 55  MODH  27 LATCH  84 PHASE SHIFTER  90 LATCH

PHASE SHIFTER

PHASE ADJUSTER

RZERO

59 WINDOW DETECTOR  60

85 PHASE ADJUST SIG. GENERATOR

RSC

* S21  CON 2  CON 3

7D

FROM 42  RSC

43  FROM 41  1/4 DIV.  RCK

READ SIG. FORMING CKT.